# EUROPEAN PATENT APPLICATION

(11) **EP 4 675 594 A1**
(43) Date of publication of application: **07.01.2026**
(21) Application number: 25156553.7
(22) Date of filing: 07.02.2025
(51) Int. Cl.: G08G 5/22, B64F 1/32, G08G 5/51, G08G 5/72, G08G 5/80

(54) **INFORMATION PROCESSING METHOD, INFORMATION PROCESSING PROGRAM, AND INFORMATION PROCESSING DEVICE**

(30) Priority: 04.07.2024 JP 2024108244; 14.01.2025 JP 2025004869
(71) Applicant: Panasonic Intellectual Property Management Co., Ltd., Kadoma-shi, Osaka 571-0057 (JP)
(72) Inventor: TASAKI, Nobuaki, Osaka, 571-8501 (JP); JOHN, Stephen William, Osaka, 571-8501 (JP); ANABUKI, Motoshi, Osaka, 571-8501 (JP)
(74) Representative: Eisenführ Speiser

(57) **Abstract**

An information processing method according to the present disclosure includes generating, by a computer, a traveling route for each set of a type of ground support equipment (GSE) (30) to be generated and a type of an aircraft (10), based on the type of the GSE (30) to be generated indicating a target for which the traveling route indicating a traveling path of the GSE (30) in an airport is generated, the type of the aircraft (10), coordinates of a departure point and a destination point of the GSE (30) to be generated, and a standard traveling route indicating a traveling route preset for each set of the type of the GSE (30) and the type of the aircraft (10).

## Description

### FIELD

Embodiments described herein relate generally to an information processing method, an information processing program, and an information processing device.

### BACKGROUND

In recent years, efforts have been made to introduce an autonomously movable mobile body such as an automated driving vehicle in ground handling work. For example, ground support equipment (GSE) or the like automatically travels based on a predetermined traveling path.

However, the parking position of an aircraft changes every time and the combination of the parking position, the type of the aircraft, and the type of the GSE changes, and thus a traveling path on which the GSE travels and a stop position of the GSE are changed. Therefore, in some cases, it is difficult for the GSE to approach the aircraft by autonomous traveling. In addition, because the aircraft is expensive and has a large influence when an accident of the aircraft occurs, there is a demand for a method with a small collision risk between the GSE and the aircraft. Conventional technologies are described in Japanese Patent Application Laid-open No. 2020-27321, for example.

The present disclosure has been made in view of the above, and an object thereof is to provide an information processing method, an information processing program, and an information processing device, which are capable of providing, for each set of a type of the GSE and a model of the aircraft, a traveling route on which GSE travels to a designated position corresponding to an actual parking position of an aircraft.

### SUMMARY

An information processing method according to an embodiment of the present disclosure includes generating, by a computer, a traveling route for each set of a type of ground support equipment (GSE) to be generated and a type of an aircraft, based on the type of the GSE to be generated indicating a target for which the traveling route indicating a traveling path of the GSE in an airport is generated, the type of the aircraft, coordinates of a departure point and a destination point of the GSE to be generated, and a standard traveling route indicating the traveling route preset for each set of the type of the GSE and the type of the aircraft.

### BRIEF DESCRIPTION OF THE DRAWINGS

FIG. 1 is a schematic diagram illustrating an example of an information processing system according to an embodiment;
FIG. 2 is a block diagram illustrating an example of a functional configuration of an aircraft control system according to the embodiment;
FIG. 3 is a block diagram illustrating an example of a functional configuration of a mobile body according to the embodiment;
FIG. 4 is a block diagram illustrating an example of a functional configuration of a remote control terminal according to the embodiment;
FIG. 5 is a schematic diagram illustrating an example of a display screen displayed by the remote control terminal according to the embodiment;
FIG. 6 is a block diagram illustrating an example of a functional configuration of a server according to the embodiment;
FIG. 7 is a table illustrating an example of GSE information according to the embodiment;
FIG. 8 is a table illustrating an example of standard traveling route information according to the embodiment;
FIG. 9 is a table for explaining similar models according to the embodiment;
FIG. 10 is a schematic diagram for explaining a traveling route according to the embodiment;
FIG. 11 is a schematic diagram for explaining a traveling route to be corrected according to the embodiment;
FIG. 12 is a schematic diagram for explaining a traveling route to be corrected according to the embodiment;
FIG. 13 is a flowchart illustrating an example of a flow of information processing executed by a control unit of the server according to the embodiment;
FIG. 14 is a flowchart illustrating an example of a flow of information processing executed by the control unit of the server according to the embodiment;
FIG. 15 is a block diagram illustrating an example of a functional configuration of a server according to a first modification;
FIG. 16 is a schematic diagram illustrating an example of a display screen displayed by a remote control terminal according to the first modification;
FIG. 17 is a schematic diagram illustrating an example of a display screen displayed by an aircraft control system according to the first modification;
FIG. 18 is a schematic diagram illustrating an example of the display screen displayed by the remote control terminal according to the first modification;
FIG. 19 is a flowchart illustrating an example of a flow of information processing executed by a control unit of a server according to the first modification;
FIG. 20 is a flowchart illustrating an example of a flow of information processing executed by the control unit of the server according to the first modification;
FIG. 21 is a block diagram illustrating an example of a functional configuration of a server according to a second modification;
FIG. 22 is a schematic diagram illustrating an example of a display screen displayed by a remote control terminal according to the second modification;
FIG. 23 is a flowchart illustrating an example of a flow of information processing executed by a control unit of a server according to the second modification;
FIG. 24 is a block diagram illustrating an example of a functional configuration of a server according to a third modification;
FIG. 25 is a schematic diagram illustrating an example of a display screen displayed by a remote control terminal according to the third modification;
FIG. 26 is a schematic diagram illustrating an example of a display screen displayed by an aircraft control system according to the third modification;
FIG. 27 is a flowchart illustrating an example of a flow of information processing executed by a control unit of the server according to the third modification;
FIG. 28 is a flowchart illustrating an example of a flow of information processing executed by the control unit of the server according to the third modification;
FIG. 29 is a schematic diagram illustrating an example of a display screen displayed by a remote control terminal according to a fourth modification; and
FIG. 30 is a block diagram illustrating an example of a hardware configuration of the information processing system according to the embodiment and the modifications.

### DETAILED DESCRIPTION

Embodiments of an information processing method, an information processing program, and an information processing device will be described in detail below with reference to the accompanying drawings. In the present embodiment, a mode will be described in which a mobile body on which ground support equipment (GSE) is mounted is located at an airport in a real space, and a traveling route on which the GSE travels to a designated position corresponding to an actual parking position of an aircraft is generated for each set of a type of the GSE and a model of the aircraft with respect to a position at which an aircraft of the airport is parked.

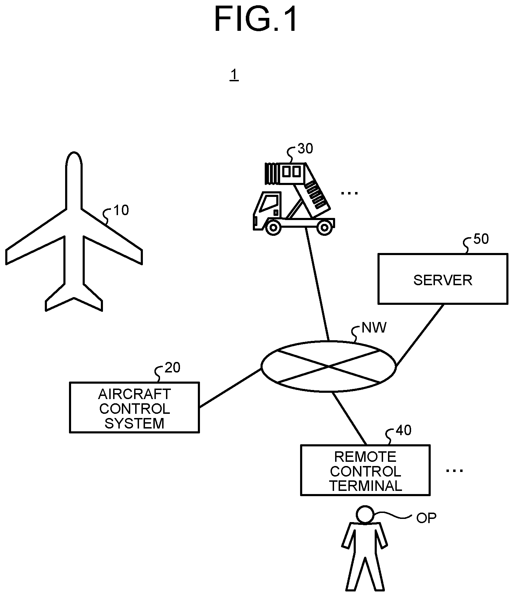

FIG. 1 is a schematic diagram illustrating an example of an information processing system according to an embodiment.

An information processing system 1 includes an aircraft 10, an aircraft control system 20, one or more mobile bodies 30, one or more remote control terminals 40, and a server 50. The aircraft control system 20 and the server 50 are communicably connected to each other via a network NW or the like. The mobile body 30 and the remote control terminal 40 are communicably connected to each other via the network NW or the like. The mobile body 30 and the server 50 are communicably connected to each other via the network NW or the like. The remote control terminal 40 and the server 50 are communicably connected to each other via the network NW or the like.

The network NW that communicably connects the aircraft control system 20 and the server 50, the network NW that communicably connects the mobile body 30 and the remote control terminal 40, the network NW that communicably connects the mobile body 30 and the server 50, and the network NW that communicably connects the remote control terminal 40 and the server 50 may be the same network or different networks.

The aircraft 10 is a target of air-traffic control by the aircraft control system 20. The aircraft 10 takes off from an airport, lands on the airport, moves in the airport, and parks at a predetermined position based on an instruction from the aircraft control system 20. The aircraft 10 has a sensor, and sequentially outputs a detection result output by the sensor to the aircraft control system 20 along a time series of the state of the aircraft 10. Here, the sensor included in the aircraft 10 is, for example, a global navigation satellite system (GNSS) or a global positioning system (GPS).

The aircraft control system 20 is a system that provides the aircraft 10 with instructions, information, and the like regarding movement in the airport from the ground to the aircraft 10. The aircraft control system 20 is also a system that manages a parking position at which the aircraft 10 in the airport is parked. The aircraft control system 20 is, for example, a system used by an air-traffic controller or the like.

The mobile body 30 is a target of remote air-traffic control by an operator OP, and is an autonomously movable vehicle. The mobile body 30 is, for example, a vehicle on which the GSE used by the aircraft 10 is mounted. The mobile body 30 may be hereinafter referred to as GSE. In the present embodiment, a mode in which the mobile body 30 is an autonomously movable vehicle will be described as an example.

The remote control terminal 40 is a device for remotely air-traffic controlling the mobile body 30. The remote control terminal 40 is operated by the operator OP in charge of remote air-traffic control of the mobile body 30. The remote control terminal 40 is an example of an information processing device.

The remote air-traffic control means a task related to remote air-traffic control of the mobile body 30 by the operator OP. The remote air-traffic control includes at least one of remote operation on the mobile body 30 and remote monitoring of the mobile body 30.

The server 50 is a device that executes management and the like of the mobile body 30 and the remote control terminal 40. The server 50 is a dedicated or general-purpose computer.

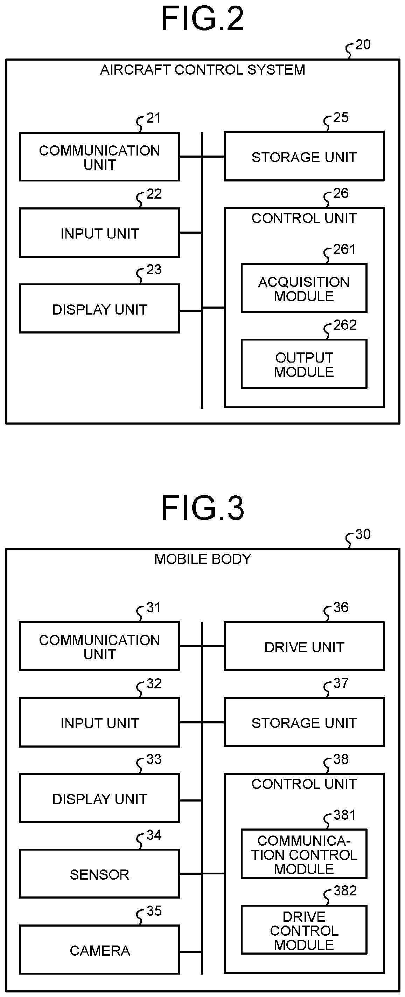

FIG. 2 is a block diagram illustrating an example of a functional configuration of the aircraft control system 20 according to the present embodiment.

The aircraft control system 20 includes a communication unit 21, an input unit 22, a display unit 23, a storage unit 25, and a control unit 26. The communication unit 21, the input unit 22, the display unit 23, the storage unit 25, and the control unit 26 are communicably connected to each other via a bus or the like.

The communication unit 21 communicates with the server 50 via the network NW or the like. The input unit 22 receives various operations by a user. The display unit 23 outputs various types of information. The display unit 23 is a display that displays various types of information, a speaker that outputs various types of sound, or the like.

The storage unit 25 stores various types of data. The storage unit 25 is, for example, a semiconductor memory element such as a random access memory (RAM) or a flash memory, a hard disk, an optical disk, or the like. Note that the storage unit 25 may be a storage device provided outside the aircraft control system 20. In addition, the storage unit 25 may be a storage medium that stores or temporarily stores programs and various types of information downloaded via a local area network (LAN), the Internet, or the like.

The control unit 26 is a computer that executes information processing in the aircraft control system 20.

The control unit 26 includes an acquisition module 261 and an output module 262.

The acquisition module 261 and the output module 262 are implemented by one or more processors. For example, each of the above-described units may be implemented by causing a processor such as a central processing unit (CPU) to execute a program, that is, by software. Each of the above-described units may be implemented by a processor such as a dedicated IC, that is, by hardware. Each of the above-described units may be implemented by a combination of software and hardware. When a plurality of processors is used, each processor may implement one of the units, or may implement two or more of the units.

The acquisition module 261 acquires sensor information indicating a detection result output by a sensor of the aircraft 10. Here, the detection result includes the current position of the aircraft 10, the moving direction of the aircraft 10, the inclination of the aircraft 10, and the like. The inclination of the aircraft 10 is an inclination deviated from a preset parking position of the aircraft 10.

The acquisition module 261 also acquires aircraft information regarding the aircraft 10. The aircraft information includes a type of the aircraft 10, operation information, map information in the airport, and parking information indicating a parking position of the aircraft 10. The type of the aircraft 10 is, for example, a manufacturer or a model number of the aircraft 10. The operation information includes information regarding a flight name, a departure time, an arrival time, and a parking position of the aircraft 10, a latest operating condition of the aircraft 10, and the like.

The map information in the airport includes position information of objects such as buildings located in the airport. The parking information includes parking position coordinate information indicating the coordinates of the parking position of the aircraft 10 in the airport, parking time information indicating the time during which the aircraft 10 is parked at the parking position, and the like.

Further, the acquisition module 261 acquires GSE information indicating the type of the GSE used for the aircraft 10. The type of the GSE is, for example, a manufacturer or a model number of the GSE.

The output module 262 outputs the detection result, the aircraft information, and the GSE information acquired by the acquisition module 261 to the server 50.

The mobile body 30 will now be described. FIG. 3 is a block diagram illustrating an example of a functional configuration of the mobile body 30 according to the embodiment.

The mobile body 30 includes a communication unit 31, an input unit 32, a display unit 33, a sensor 34, a camera 35, a drive unit 36, a storage unit 37, and a control unit 38. The communication unit 31, the input unit 32, the display unit 33, the sensor 34, the camera 35, the drive unit 36, the storage unit 37, and the control unit 38 are communicably connected to each other via a bus or the like.

The communication unit 31 communicates with the remote control terminal 40 via the network NW or the like. The communication unit 31 also communicates with the server 50 via the network NW or the like. The input unit 32 receives various operations by the user. The display unit 33 outputs various types of information. The display unit 33 is a display that displays various types of information, a speaker that outputs various types of sound, a light that turns on or blinks, or the like.

The sensor 34 detects the state of the mobile body 30. The sensor 34 is, for example, an internal sensor and an external sensor.

The internal sensor is a sensor that obtains observation information of the interior of the mobile body 30. The observation information is information on a position, a speed, an acceleration, a steering angle, a steering direction, an accelerator depression angle, a vibration and the like of the mobile body 30. Specifically, the internal sensor includes at least a position sensor (GNSS, GPS). The internal sensor also includes, for example, an inertial measurement unit (IMU), an acceleration sensor, a speed sensor, a speed sensor such as a gyro sensor, a rotary encoder, a steering angle sensor, a steering direction sensor, an accelerator depression angle detection sensor, a vibration sensor, and the like.

The external sensor is a sensor that obtains distance information. The distance information is information indicating a distance to an object around the mobile body 30 located on the traveling route. The object around the mobile body 30 is, for example, the aircraft 10, another mobile body 30, a building or a person located in the airport, or the like.

The external sensor is, for example, a distance sensor. The distance sensor is, for example, a millimeter-wave radar, a laser sensor, a distance image sensor, or the like. The laser sensor is, for example, a two-dimensional laser imaging detection and ranging (LiDAR) sensor or a three-dimensional LiDAR sensor installed parallel to a horizontal plane.

The sensor 34 sequentially detects the state of the mobile body 30 along a time series, and sequentially outputs the detection result to the control unit 38.

The camera 35 captures an image of the surroundings of the mobile body 30 and acquires captured data. In the present embodiment, the captured data is also simply referred to as an image. The mobile body 30 may be provided with a plurality of cameras 35 having different imaging directions.

The drive unit 36 is a control device dedicated to a device that is mounted on the mobile body 30 and performs drive related to the movement of the mobile body 30. The drive unit 36 is, for example, an electronic control unit (ECU) that controls an engine or the like, a motor driver that controls a motor, or the like. The drive unit 36 controls drive of the device under the control of the control unit 38.

The storage unit 37 stores various types of data. The storage unit 37 is, for example, a semiconductor memory element such as a RAM or a flash memory, a hard disk, an optical disk, or the like. Note that the storage unit 37 may be a storage device provided outside the mobile body 30. In addition, the storage unit 37 may be a storage medium that stores or temporarily stores programs and various types of information downloaded via a LAN, the Internet, or the like.

The control unit 38 is a computer that executes information processing in the mobile body 30.

The control unit 38 includes a communication control module 381 and a drive control module 382. The communication control module 381 and the drive control module 382 are implemented by one or more processors. For example, each of the above-described units may be implemented by causing a processor such as a CPU to execute a program, that is, by software. Each of the above-described units may be implemented by a processor such as a dedicated IC, that is, by hardware. Each of the above-described units may be implemented by a combination of software and hardware. When a plurality of processors is used, each processor may implement one of the units, or may implement two or more of the units.

The communication control module 381 controls communication with the server 50. For example, the communication control module 381 transmits the mobile body information to the server 50 via the communication unit 31. For example, the communication control module 381 receives standard traveling route information indicating a traveling route on which the mobile body 30 travels in the airport from the server 50 via the communication unit 31. Details of the standard traveling route information will be described later.

The mobile body information is information regarding the traveling environment of the mobile body 30. The mobile body information includes, for example, a mobile body IDentification (ID), a detection result of the sensor 34, an image captured by the camera 35, camera coordinate system information of the camera 35, and GSE position information. The mobile body ID is identification information of the mobile body 30. The GSE position information includes information indicating a current position of the mobile body 30.

The camera coordinate system information is information representing a camera coordinate system in which the center position of the lens of the camera 35 in the real space is an origin and the main axis direction of the lens of the camera 35 is the Z-axis direction. The camera coordinate system information is represented by, for example, a coordinate system indicating the center position of the lens of the camera 35 in the real space and the posture (orientation) of the camera 35. For example, the camera coordinate system information of the camera 35 mounted on the mobile body 30 may be detected by the sensor 34 or may be input by an operation instruction or the like of the input unit 32 by the user.

The drive control module 382 causes the mobile body 30 to autonomously move by controlling the drive unit 36.

The drive control module 382 determines a situation around the mobile body 30 based on a detection result of the sensor 34 or the like, controls an acceleration amount, a braking amount, a steering angle, and the like, and controls the drive unit 36 such that the mobile body 30 autonomously moves along the standard traveling route.

The drive control module 382 also executes remote drive based on remote operation information received from the remote control terminal 40 via the server 50. The remote drive means traveling and drive in response to a remote operation by the remote control terminal 40. At the time of remote drive, the drive control module 382 controls an acceleration amount, a braking amount, a steering angle, and the like based on the remote operation information received from the remote control terminal 40, and controls the drive unit 36 such that the mobile body 30 travels according to an operation instruction by the remote control terminal 40. In addition, the drive control module 382 controls the drive unit 36 based on the remote operation information, thereby controlling the drive unit 36 such that the mobile body 30 is driven according to the operation instruction by the remote control terminal 40.

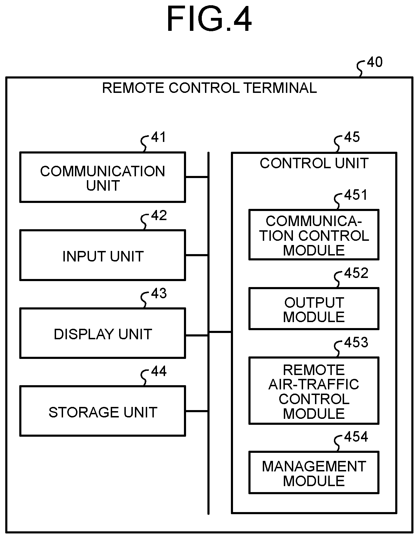

The remote control terminal 40 will now be described. FIG. 4 is a block diagram illustrating an example of a functional configuration of the remote control terminal 40 according to the embodiment.

The remote control terminal 40 includes a communication unit 41, an input unit 42, a display unit 43, a storage unit 44, and a control unit 45. The communication unit 41, the input unit 42, the display unit 43, the storage unit 44, and the control unit 45 are communicably connected to each other via a bus or the like.

The communication unit 41 communicates with the server 50 via the network NW or the like. The input unit 42 receives various operations by the operator OP. The display unit 43 outputs various types of information. The display unit 43 is a display that displays various types of information, a speaker that outputs various types of sound, or the like.

The storage unit 44 stores various types of data. The storage unit 44 is, for example, a semiconductor memory element such as a RAM or a flash memory, a hard disk, an optical disk, or the like. Note that the storage unit 44 may be a storage device provided outside the remote control terminal 40. In addition, the storage unit 44 may be a storage medium that stores or temporarily stores programs and various types of information downloaded via a LAN, the Internet, or the like.

The control unit 45 is a computer that executes information processing in the remote control terminal 40.

The control unit 45 includes a communication control module 451, an output module 452, a remote air-traffic control module 453, and a management module 454. The communication control module 451, the output module 452, the remote air-traffic control module 453, and the management module 454 are implemented by one or more processors. For example, each of the above-described units may be implemented by causing a processor such as a CPU to execute a program, that is, by software. Each of the above-described units may be implemented by a processor such as a dedicated IC, that is, by hardware. Each of the above-described units may be implemented by a combination of software and hardware. When a plurality of processors is used, each processor may implement one of the units, or may implement two or more of the units. In addition, at least one of the units included in the control unit 45 may be mounted on an external information processing device that is communicably connected to the remote control terminal 40 via the network NW or the like.

The communication control module 451 controls communication with the server 50.

The output module 452 outputs a display screen received from the server 50 via the communication control module 451 and the communication unit 41 to the display of the display unit 43. The display screen includes an image of the surroundings of the mobile body 30 captured by the mobile body 30. The operator OP can perform remote air-traffic control such as remote monitoring and remote operation of the mobile body 30 by operating the input unit 42 while viewing the display screen displayed on the display unit 43.

The remote air-traffic control module 453 remotely air-traffic controls the mobile body 30 in response to the operation of the input unit 42 by the operator OP. For example, the remote air-traffic control module 453 transmits, to the server 50, remote operation information according to an operation instruction for the mobile body 30 input in response to the operation of the input unit 42 by the operator OP, together with the mobile body ID of the mobile body 30. The server 50 transmits the remote operation information to the mobile body 30 identified by the mobile body ID. The mobile body 30 controls the drive unit 36 based on the remote operation information, thereby executing movement or drive of the mobile body 30 according to the remote air-traffic control by the operator OP. Therefore, the mobile body 30 is remotely air-traffic controlled by the operator OP who operates the remote control terminal 40.

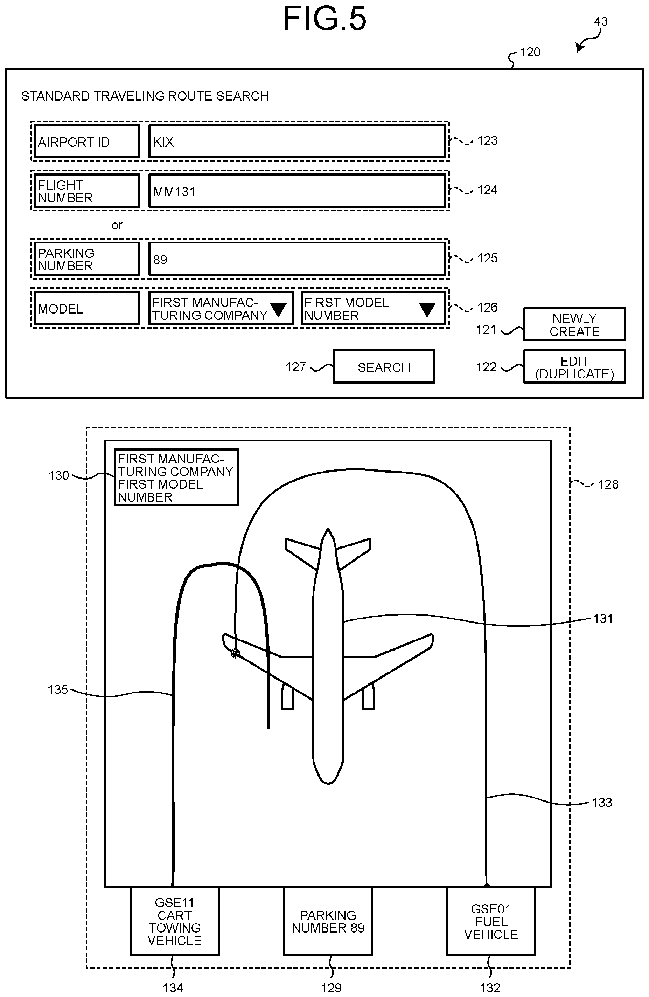

The management module 454 manages a traveling route on which the mobile body 30 travels. Specifically, the management module 454 manages a traveling route on which the mobile body 30 travels, which is generated by the server 50. Here, the traveling route managed by the remote control terminal 40 will be described with reference to FIG. 5.

FIG. 5 is a schematic diagram illustrating an example of a display screen 120 displayed by the remote control terminal 40 according to the embodiment. For example, the operator OP sets a traveling route indicating a traveling path of the mobile body 30 in the airport by using a standard traveling route indicating a traveling route preset for each set of the type of the mobile body 30 and the type of the aircraft 10.

The display screen 120 illustrated in FIG. 5 illustrates a reception section 121 for newly creating a traveling route on which the mobile body 30 travels, a reception section 122 for editing or duplicating an already generated standard traveling route, a reception section 123 for inputting an airport ID indicating an identifier of an airport, a reception section 124 for inputting a flight number indicating a flight name of the aircraft 10, a reception section 125 for inputting a parking number of a position at which the aircraft 10 is parked, a reception section 126 for inputting a model (type) of the aircraft 10, and a reception section 127 for searching for a standard traveling route. The model of the aircraft 10 is specified by, for example, a set of the manufacturer that manufactured the aircraft 10 and the model number of the aircraft 10.

The operator OP inputs each piece of information to the reception section displayed on the display screen 120 described above via the input unit 42. For example, the operator OP inputs "KIX" to the reception section 123, "MM131" to the reception section 124, "89" to the reception section 125, and "first manufacturing company" and "first model number" to the reception section 126, and operates the reception section 121.

The remote control terminal 40 also transmits each piece of the input information to the server 50 via the communication unit 41. Further, the server 50 generates a traveling route corresponding to the input information, and transmits traveling route information including the generated traveling route to the remote control terminal 40 via a communication unit 51 which will be described later. Then, the remote control terminal 40 displays the generated traveling route information on the display unit 43.

The traveling route information 128 displayed by the display unit 43 illustrated in FIG. 5 illustrates an icon 129 indicating the parking number "89", an icon 130 indicating the model "first manufacturing company first model number" of the aircraft 10, an icon 131 of the aircraft 10 corresponding to the traveling route, an icon 132 indicating the type "GSE01 fuel vehicle" of the mobile body 30, a traveling path 133 on which the type "GSE01 fuel vehicle" of the mobile body 30 travels, an icon 134 indicating the type "GSE11 cart towing vehicle" of the mobile body 30, and a traveling path 135 on which the type "GSE11 cart towing vehicle" of the mobile body 30 travels.

Thus, the management module 454 manages the traveling route on which the mobile body 30 travels, which is generated by the server 50. Details of the traveling route generated by the server 50 will be described later.

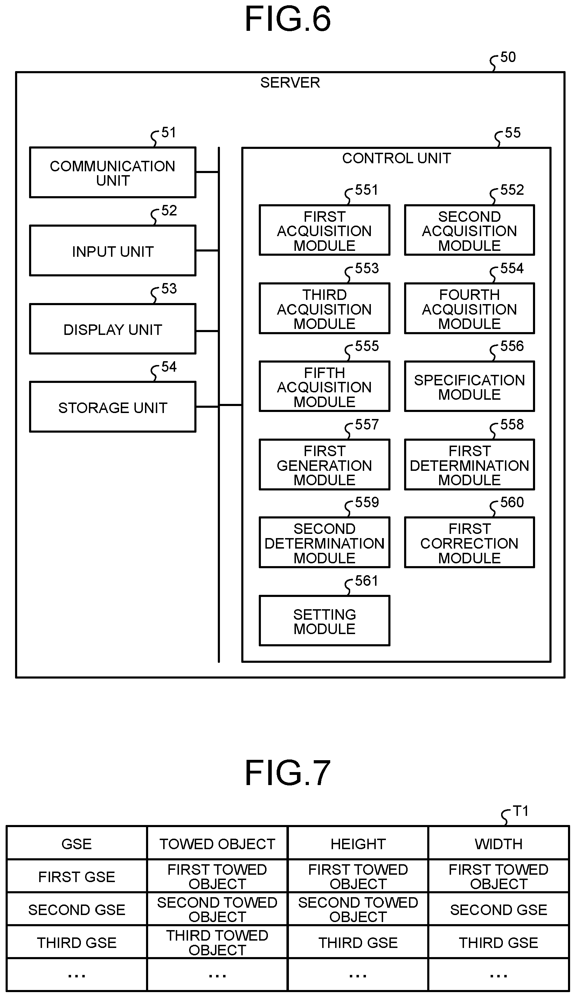

The server 50 will now be described. FIG. 6 is a block diagram illustrating an example of a functional configuration of the server 50 according to the embodiment.

The server 50 includes a communication unit 51, an input unit 52, a display unit 53, a storage unit 54, and a control unit 55. The communication unit 51, the input unit 52, the display unit 53, the storage unit 54, and the control unit 55 are communicably connected to each other via a bus or the like.

The communication unit 51 communicates with the aircraft control system 20, the mobile body 30, the remote control terminal 40, and the like via the network NW or the like. The input unit 52 receives various operations by the user. The display unit 53 outputs various types of information. The display unit 53 is a display that displays various types of information, a speaker that outputs various types of sound, or the like.

The storage unit 54 stores various types of data. The storage unit 54 is, for example, a semiconductor memory element such as a RAM or a flash memory, a hard disk, an optical disk, or the like. Note that the storage unit 54 may be a storage device provided outside the server 50. In addition, the storage unit 54 may be a storage medium that stores or temporarily stores programs and various types of information downloaded via a LAN, the Internet, or the like. At least a part of the information stored in the storage unit 54 may be stored in a storage device such as an external server device communicably connected to the server 50.

In the present embodiment, the storage unit 54 stores GSE information, aircraft information, point information, standard traveling route information, towed object information, GSE position information, safety area information, no-entry information, and the like. Note that the information stored in the storage unit 54 is not limited thereto.

The control unit 55 is a computer that executes information processing in the server 50.

The control unit 55 includes a first acquisition module 551, a second acquisition module 552, a third acquisition module 553, a fourth acquisition module 554, a fifth acquisition module 555, a specification module 556, a first generation module 557, a first determination module 558, a second determination module 559, a first correction module 560, and a setting module 561. The first acquisition module 551, the second acquisition module 552, the third acquisition module 553, the fourth acquisition module 554, the fifth acquisition module 555, the specification module 556, the first generation module 557, the first determination module 558, the second determination module 559, the first correction module 560, and the setting module 561 are implemented by one or more processors.

For example, each of the above-described units may be implemented by causing a processor such as a CPU to execute a program, that is, by software. Each of the above-described units may be implemented by a processor such as a dedicated IC, that is, by hardware. Each of the above-described units may be implemented by a combination of software and hardware. When a plurality of processors is used, each processor may implement one of the units, or may implement two or more of the units. At least one of the above-described units included in the server 50 may be mounted on an external information processing device communicably connected to the server 50 via the network NW or the like.

The first acquisition module 551 acquires GSE information. Specifically, the first acquisition module 551 acquires the GSE information stored in the storage unit 54. For example, the first acquisition module 551 acquires, from the GSE information stored in the storage unit 54, a type of the mobile body 30 to be generated indicating a target for which the traveling route indicating the traveling path of the mobile body 30 in the airport is generated. Here, the GSE information will be described with reference to FIG. 7.

FIG. 7 is a table illustrating an example of GSE information according to the embodiment. The GSE information is information regarding the mobile body 30 used in the aircraft 10 parked in the airport. Note that the data format of the GSE information is not limited to the table.

The GSE information of the table T1 illustrated in FIG. 7 is a table in which the type of the mobile body 30, the type of the towed object towed by the mobile body 30, information regarding the height of the mobile body 30 and the towed object having a larger size in the height direction, and information regarding the width of the mobile body 30 and the towed object having a larger width in the horizontal direction are associated with each other.

For example, in the table T1, a set of first GSE and a first towed object illustrates information indicating that, among the first GSE and the first towed object, the first towed object has a larger height in the height direction and the first towed object has a larger width in the horizontal direction. Similarly, in the table T1, a set of second GSE and a second towed object illustrates information indicating that, among the second GSE and the second towed object, the second towed object has a larger height in the height direction and the second GSE has a larger width in the horizontal direction.

Similarly, in the table T1, a set of third GSE and a third towed object illustrates information indicating that, among the third GSE and the third towed object, the third GSE has a larger height in the height direction and the third GSE has a larger width in the horizontal direction.

Returning to FIG. 6, the second acquisition module 552 acquires aircraft information. Specifically, the second acquisition module 552 acquires the aircraft information from the aircraft control system 20. For example, the second acquisition module 552 acquires the type of the aircraft 10 from the aircraft information.

The third acquisition module 553 acquires point information. Specifically, the third acquisition module 553 acquires the point information stored in the storage unit 54. The point information is information including coordinates of a departure point and a destination point of the mobile body 30 to be generated for which the traveling route is generated.

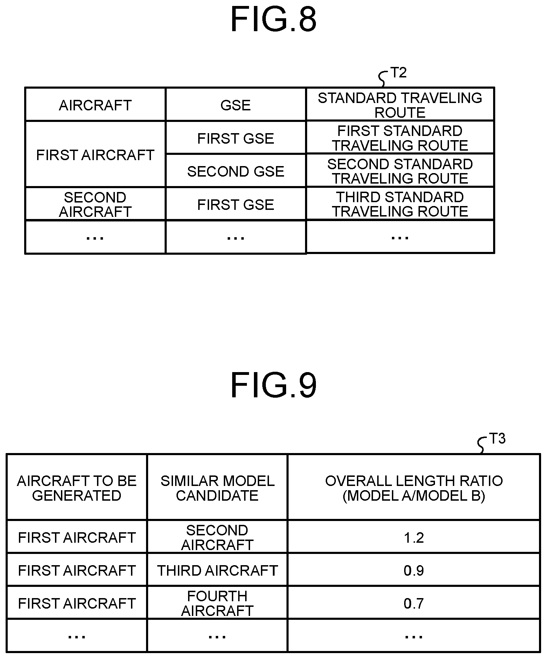

The fourth acquisition module 554 acquires standard traveling route information. Specifically, the fourth acquisition module 554 acquires the standard traveling route information stored in the storage unit 54. Here, the standard traveling route information will be described with reference to FIG. 8.

FIG. 8 is a table illustrating an example of standard traveling route information according to the embodiment. The standard traveling route indicates a traveling route preset for each set of the type of the GSE and the type of the aircraft 10. Note that the data format of the standard traveling route information is not limited to the table.

The standard traveling route information of the table T2 illustrated in FIG. 8 is a table in which the type of the aircraft 10, the type of the GSE, and the standard traveling route are associated with each other. For example, the table T2 illustrates information in which a first standard traveling route is set for a set of a first aircraft and the first GSE. Similarly, the table T2 illustrates information in which a second standard traveling route is set for a set of the first aircraft and the second GSE.

Similarly, the table T2 illustrates information in which a third standard traveling route is set for a set of a second aircraft and the first GSE. Note that the standard traveling route information may be associated with a standard position of the aircraft 10 corresponding to the standard traveling route. The standard position of the aircraft 10 is, for example, a distance connecting the center point of the center of the aircraft 10 in which the parking position where the aircraft 10 is parked is set as an origin. In addition, the standard position of the aircraft 10 is, for example, the position coordinates of the center of the aircraft 10 at the parking position where the aircraft 10 is parked.

Returning to FIG. 6, the fifth acquisition module 555 acquires towed object information. Specifically, the fifth acquisition module 555 acquires the towed object information indicating the towed object towed by the mobile body 30 from the storage unit 54. The towed object information is information including the type of the towed object, the content towed by the towed object, the size of the towed object in the height direction, and the size of the towed object in the horizontal direction.

The specification module 556 specifies a similar model. Specifically, the specification module 556 specifies, from the standard traveling route stored in the storage unit 54, a similar model that is similar to the type of the aircraft 10 to be generated for which the traveling route is generated.

For example, the specification module 556 specifies, as similar candidates indicating candidates for a model similar to the type of the aircraft 10 to be generated for which the traveling route is generated, the type of the aircraft 10 that matches the types and the numbers of the mobile bodies 30 used for the type of the aircraft 10 to be generated from among the types of the aircraft 10 included in the set of the type of the mobile body 30 and the type of the aircraft 10, for which the standard traveling route has been set. Then, the specification module 556 specifies, as a similar model indicating a model similar to the type of the aircraft 10 to be generated, a similar model candidate having the smallest difference between the size of the similar model candidate and the size of the type of the aircraft 10 to be generated among the specified similar candidates.

Here, the fact that the difference between the size of the similar model candidate and the size of the type of the aircraft 10 to be generated is the smallest means that the ratio between the length of the overall length of the similar model candidate and the length of the overall length of the aircraft 10 to be generated is the smallest.

FIG. 9 is a table for explaining similar models according to the embodiment. The table T3 illustrated in FIG. 9 is a table in which the type of the aircraft 10 to be generated, the similar model candidate, and the overall length ratio indicating the ratio of the overall length of the type of the aircraft 10 to be generated to the overall length of the similar model candidate are associated with each other.

For example, when the type of the aircraft 10 to be generated is the first aircraft illustrated in FIG. 9, the specification module 556 specifies the second aircraft, the third aircraft, and the fourth aircraft as the similar model candidates of the first aircraft. The table T3 illustrated in FIG. 9 illustrates that the overall length ratio between the first aircraft and the second aircraft is 1.2, the overall length ratio between the first aircraft and the third aircraft is 0.9, and the overall length ratio between the first aircraft and the fourth aircraft is 0.7. In this case, in the table T3 illustrated in FIG. 9, since the similar model candidate having the smallest overall length ratio is the third aircraft, the specification module 556 specifies the third aircraft as a similar model indicating a model similar to the first aircraft to be generated among the specified similar model candidates.

Note that, in the present embodiment, when the difference between the size of the similar model candidate and the size of the type of the aircraft 10 to be generated is the smallest, the ratio between the length of the overall length of the similar model candidate and the length of the overall length of the aircraft 10 to be generated is the smallest, but the present embodiment is not limited thereto, and for example, the difference value between the length of the overall length of the similar model candidate and the length of the overall length of the aircraft 10 to be generated may be the smallest, or the ratio or the difference value between the length of the lateral width of the similar model candidate and the length of the lateral width of the aircraft 10 to be generated may be the smallest.

Returning to FIG. 6, the first generation module 557 generates a traveling route for each set of the type of the GSE to be generated and the type of the aircraft 10, based on the type of the GSE to be generated indicating a target for which a traveling route indicating a traveling path of the GSE in the airport is generated, the type of the aircraft 10, the coordinates of the departure point and the destination point of the GSE to be generated, and a standard traveling route indicating a traveling route preset for each set of the type of the GSE and the type of the aircraft 10.

Specifically, the first generation module 557 generates a traveling route for each set of the type of the mobile body 30 to be generated and the type of the aircraft 10, based on the type of the mobile body 30 to be generated indicating a target for which a traveling route indicating a traveling path of the mobile body 30 in the airport of the GSE information acquired by the first acquisition module 551 is generated, the type of the aircraft 10 of the aircraft information acquired by the second acquisition module 552, the coordinates of the departure point and the destination point of the mobile body 30 to be generated for which the traveling route of the point information acquired by the third acquisition module 553 is generated, the standard traveling route indicating the traveling route preset for each set of the type of the mobile body 30 and the type of the aircraft 10 of the standard traveling route information acquired by the fourth acquisition module 554, and the type of the towed object towed by the mobile body 30 to be generated for the towed object information acquired by the fifth acquisition module 555.

Then, based on the type of the aircraft 10 that matches the types and the number of the mobile bodies 30 used for the type of the aircraft 10 to be generated from among the types of the aircraft 10 included in the set of the type of the mobile body 30 and the type of the aircraft 10, for which the standard traveling route has been set, and a similar model candidate having a smallest difference between the size of the similar model candidate and the size of the type of the aircraft 10 to be generated from among the similar model candidates indicating the candidates of the model similar to the type of the aircraft 10 to be generated, which are specified by the specification module 556, and based on the standard traveling route corresponding to the similar model indicating the model similar to the type of the aircraft 10 to be generated, the first generation module 557 generates the traveling route for each set of the type of the mobile body 30 to be generated and the type of the aircraft 10 to be generated.

As an example, the first generation module 557 generates a traveling route for each set of the type of the mobile body 30 to be generated and the type of the aircraft 10 to be generated, from a ratio calculated from the distance between the departure point and the destination point of the mobile body 30 of the similar model specified by the specification module 556 and the distance between the departure point and the destination point of the GSE to be generated.

For example, the first generation module 557 calculates the XY-axis ratio of each of the X-axis and the Y-axis from the distance between the departure point and the destination point of the mobile body 30 of the similar model specified by the specification module 556 and the distance between the departure point and the destination point of the mobile body 30 to be generated. The XY-axis ratio is also referred to as an aspect ratio. Then, the first generation module 557 matches the departure point of the similar model with the departure point of the mobile body 30 to be generated, multiplies each of the passing point groups of the standard traveling route of the similar model specified by the specification module 556 by the calculated aspect ratio with reference to the matched departure point, and connects the multiplied passing point groups, thereby generating a traveling route for each set of the type of the mobile body 30 to be generated and the type of the aircraft 10 to be generated.

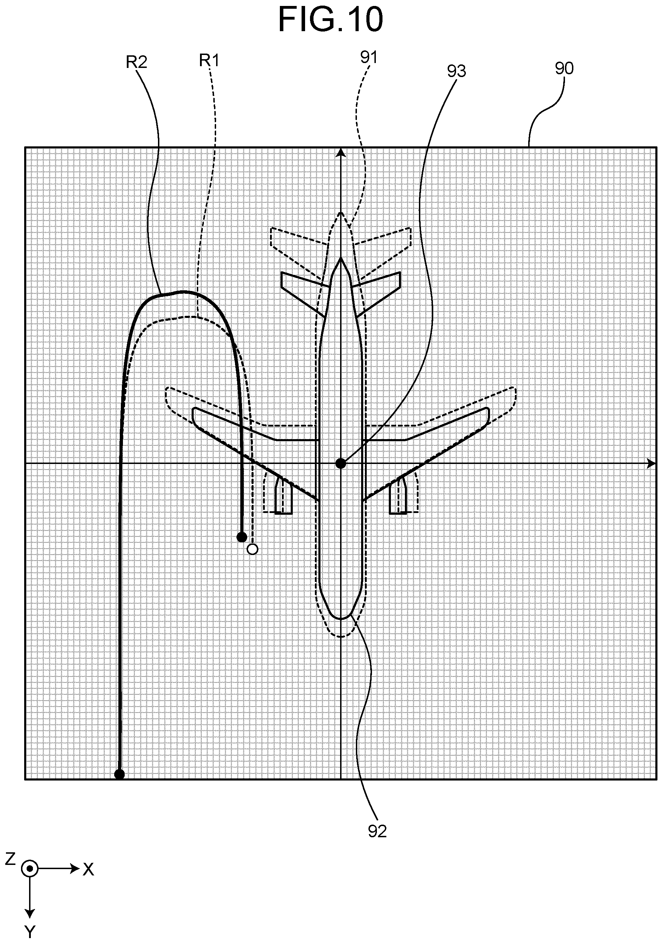

FIG. 10 is a schematic diagram for explaining a traveling route according to the embodiment. FIG. 10 illustrates a parking position 90 of the aircraft 10 parked in the airport, a schematic diagram 91 of a similar model, a schematic diagram 92 of the type of the aircraft 10 to be generated, a center point 93 indicating the center position of the aircraft 10 to be generated, a standard traveling route R1 corresponding to the mobile body 30 of a similar model, and a traveling route R2 corresponding to the mobile body 30 to be generated. Thus, the server 50 can provide, for each set of the type of the mobile body 30 and the model of the aircraft 10, a traveling route on which the mobile body 30 travels to the designated position corresponding to the actual parking position of the aircraft 10.

Returning to FIG. 6, the first determination module 558 and the second determination module 559 confirm the traveling route generated by the first generation module 557. Here, the confirmation of the traveling route refers to the confirmation of whether the type of the mobile body 30 to be generated is, for example, a safe traveling route for traveling in the airport.

Specifically, the first determination module 558 determines whether the traveling route generated by the first generation module 557 is a route that passes under the wing of the aircraft 10 to be generated. If the traveling route generated by the first generation module 557 is a route that passes under the wing of the aircraft 10 to be generated, the first determination module 558 acquires the height of the lowermost surface of the wing of the aircraft 10 to be generated from the aircraft information acquired by the second acquisition module 552.

Further, the first determination module 558 calculates a difference value between the height of the lowermost surface of the wing of the aircraft 10 to be generated and the height of the mobile body 30 to be generated or the towed object, which has a larger height in the height direction. Then, the first determination module 558 determines whether the difference value between the height of the lowermost surface of the wing of the aircraft 10 to be generated and the height of the mobile body 30 to be generated or the towed object, which has a larger height in the height direction, is larger than a predetermined threshold value.

The second determination module 559 calculates the shortest distance in the horizontal direction connecting the object located on the traveling route generated by the first generation module 557 and the mobile body 30 to be generated or the towed object, and determines whether the calculated shortest distance is larger than a predetermined threshold value.

The first correction module 560 corrects the traveling route generated by the first generation module 557. Specifically, when the first determination module 558 determines that the traveling route generated by the first generation module 557 is a route that passes under the wing of the aircraft 10 to be generated and that the difference value between the height of the lowermost surface of the wing of the aircraft 10 to be generated and the height of the mobile body 30 to be generated or the towed object, which has a larger height in the height direction, is smaller than the predetermined threshold value, the first correction module 560 corrects the generated traveling route such that the difference value becomes larger than the predetermined threshold value by being moved away from the center of the aircraft 10 to be generated.

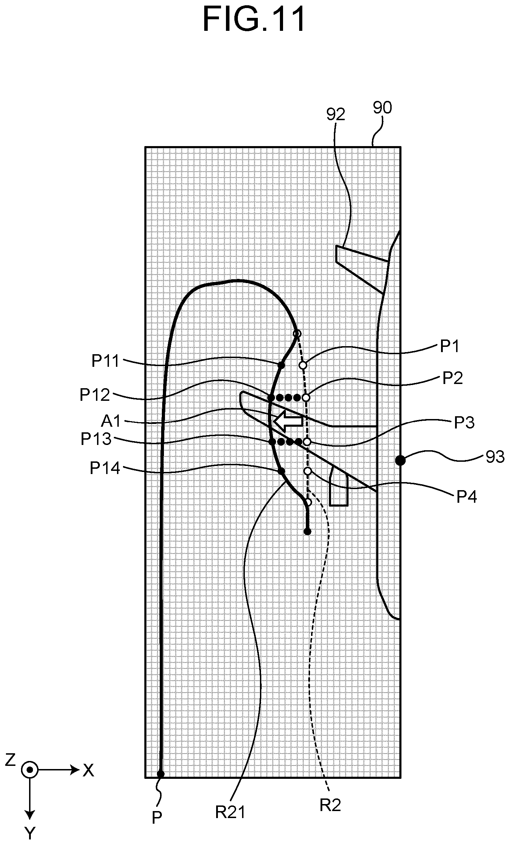

Here, the traveling route corrected by the first correction module 560 will be described with reference to FIG. 11. FIG. 11 is a schematic diagram for explaining a traveling route to be corrected according to the embodiment. FIG. 11 illustrates a parking position 90 of the aircraft 10 parked in the airport, a schematic diagram 92 of the type of the aircraft 10 to be generated, a center point 93 indicating the center position of the aircraft 10 to be generated, a traveling route R2 corresponding to the mobile body 30 to be generated, a corrected traveling route R21, and coordinates P of the departure point of the traveling route R2 and the corrected traveling route R21.

For example, the first correction module 560 specifies, for the traveling route R2 generated by the first generation module 557, a point at which a point on the front side and a point on the rear side in the vicinity of the wing are moved in the outward direction A1 of the wing at regular intervals so as to be moved away from the center point 93 of the aircraft 10 to be generated. Here, the points specified by the first correction module 560 are a point P2 and a point P3 illustrated in FIG. 11. In addition, the distance to be moved in the outward direction of the wing at regular intervals is, for example, 50 [cm]. Note that the distance to be moved is not limited to thereto, and can be set arbitrarily. Note that the outward direction of the wing is the negative direction of the X-axis illustrated in FIG. 11.

Subsequently, the first correction module 560 shifts, for the specified point P2 and point P3, one or two adjacent points from the specified point P2 and point P3 in the same direction such that the points are smoothly connected according to a designated ratio with respect to the moving distance in the vicinity of the wing such that the difference value between the height of the lowermost surface of the wing of the aircraft 10 to be generated and the height of the mobile body 30 to be generated or the towed object, which has a larger height in the height direction, is larger than a predetermined threshold value and the moving distances of the specified point P2 and point P3 are minimized within the set threshold value.

Here, as illustrated in FIG. 11, the point P1 is one adjacent point from the point P2, and the point P4 is one adjacent point from the point P3. In addition, the designated ratio is, for example, 0.75 times with respect to the distance to be moved by the neighboring front and rear neighbors, followed by 0.5 times, and so forth. Note that the designated ratio is not limited to thereto, and can be set arbitrarily.

For example, as illustrated in FIG. 11, the first correction module 560 shifts the point P1, the point P2, the point P3, and the point P4 in the same direction such that the points are smoothly connected to each other according to the designated ratio with respect to the moving distance in the vicinity of the wing, so as to be a point P11, a point P12, a point P13, and a point P14, respectively. Thus, the first correction module 560 corrects the traveling route R2 generated by the first generation module 557 to the traveling route R21.

Returning to FIG. 6, when the second determination module 559 determines that the shortest distance in the horizontal direction connecting the object located on the generated traveling route and the mobile body 30 to be generated or the towed object is smaller than the predetermined threshold value, the first correction module 560 corrects the generated traveling route such that the shortest distance becomes larger than the predetermined threshold value by being moved away from the object.

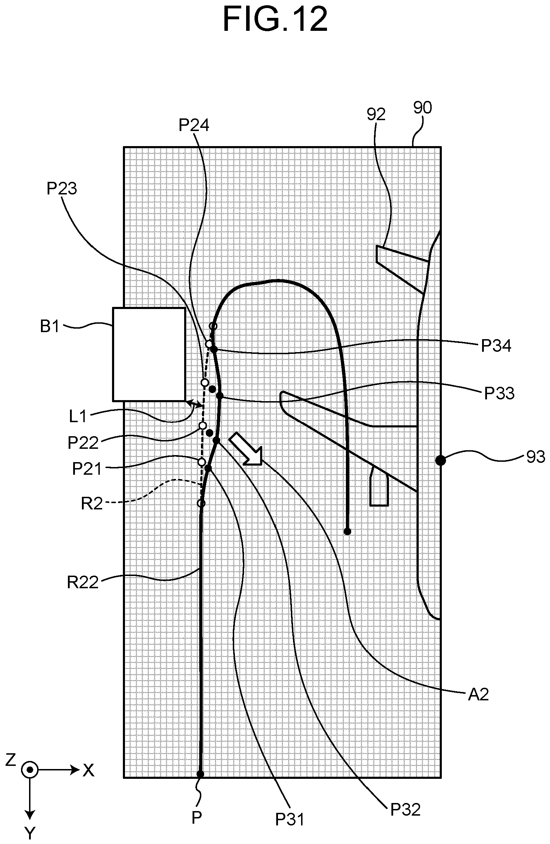

Here, the traveling route corrected by the first correction module 560 will be described with reference to FIG. 12. FIG. 12 is a schematic diagram for explaining a traveling route to be corrected according to the embodiment. FIG. 12 illustrates the parking position 90 of the aircraft 10 parked in the airport, a schematic diagram 92 of the type of the aircraft 10 to be generated, a center point 93 indicating the center position of the aircraft 10 to be generated, an object B1 located on the traveling route, a traveling route R2 corresponding to the mobile body 30 to be generated, a corrected traveling route R22, coordinates P of the departure points of the traveling route R2 and the corrected traveling route R22, and a shortest distance L1.

For example, the first correction module 560 specifies, for the traveling route R2 generated by the first generation module 557, a point at which a point on the front side and a point on the rear side in the vicinity of the object are moved in the outward direction A2 of the object B1 at regular intervals from the shortest distance L1 so as to be moved away from the object B1. Here, the points specified by the first correction module 560 are the points P22 and P23 illustrated in FIG. 12. In addition, the distance to be moved in the outward direction of the wing at regular intervals is, for example, 50 [cm]. Note that the distance to be moved is not limited to thereto, and can be set arbitrarily.

Subsequently, the first correction module 560 shifts, for the specified point P22 and point P23, one or two adjacent points from the specified point P22 and point P23 in the same direction such that the points are smoothly connected according to the designated ratio with respect to the moving distance of the shortest distance L1 such that the shortest distance in the horizontal direction connecting the object B1 located on the generated traveling route R22 and the mobile body 30 to be generated or the towed object becomes larger than the predetermined threshold value and the moving distances of the specified point P22 and point P23 are minimized which are within the set threshold value.

Here, as illustrated in FIG. 12, the point P21 is one adjacent point from the point P22, and the point P24 is one adjacent point from the point P23. In addition, the designated ratio is, for example, 0.75 times with respect to the distance to be moved by the neighboring front and rear neighbors, followed by 0.5 times, and so forth. Note that the designated ratio is not limited to thereto, and can be set arbitrarily.

For example, as illustrated in FIG. 12, the first correction module 560 shifts the point P21, the point P22, the point P23, and the point P24 in the same direction such that the points are smoothly connected to each other according to the designated ratio with respect to the moving distance of the shortest distance L1, so as to be a point P31, a point P32, a point P33, and a point P34, respectively. Thus, the first correction module 560 corrects the traveling route R2 generated by the first generation module 557 to the traveling route R22. Note that the object B1 may include the aircraft 10. In addition, the content of the process of correcting by the first correction module 560, specifically, the process of shifting the points on the traveling route generated by the first generation module 557 is also referred to as correcting the passing point group of the traveling route.

Returning to FIG. 6, the setting module 561 sets the generated traveling route as a standard traveling route. Specifically, when the difference value between the height of the lowermost surface of the wing of the aircraft 10 to be generated and the height of the mobile body 30 to be generated or the towed object, which has a larger height in the height direction, is larger than a predetermined threshold value, the setting module 561 sets the traveling route for each set of the type of the mobile body 30 to be generated and the type of the aircraft 10, which is generated by the first generation module 557, in the storage unit 54 as the standard traveling route.

In addition, when the shortest distance in the horizontal direction connecting the object B1 located on the traveling route generated by the first generation module 557 and the mobile body 30 to be generated or the towed object is larger than the predetermined threshold value, the setting module 561 sets the traveling route for each set of the type of the mobile body 30 to be generated and the type of the aircraft 10, which is generated by the first generation module 557, in the storage unit 54 as the standard traveling route. Further, the setting module 561 sets the traveling route for each set of the type of the mobile body 30 to be generated and the type of the aircraft 10, which is corrected by the first correction module 560, in the storage unit 54 as the standard traveling route. Then, the output module 452 of the remote control terminal 40 outputs the standard traveling route received from the server 50 to the display unit 43.

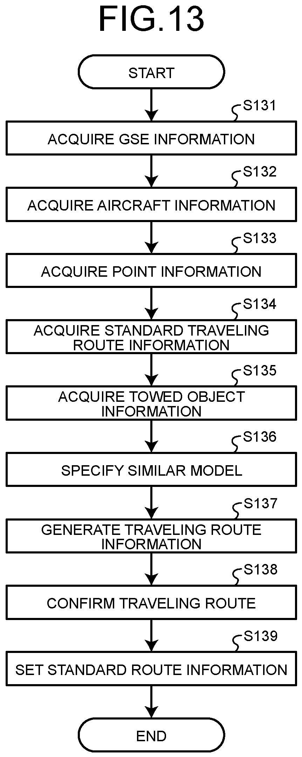

An example of a flow of information processing executed by the control unit 55 of the server 50 of the embodiment will now be described. FIG. 13 is a flowchart illustrating an example of the flow of information processing executed by the control unit 55 of the server 50 according to the embodiment.

The first acquisition module 551 acquires the GSE information stored in the storage unit 54 (step S131). Subsequently, the second acquisition module 552 acquires aircraft information from the aircraft control system 20 (step S132). Subsequently, the third acquisition module 553 acquires the point information stored in the storage unit 54 (step S133).

Subsequently, the fourth acquisition module 554 acquires the standard traveling route information stored in the storage unit 54 (step S134). Subsequently, the fifth acquisition module 555 acquires the towed object information indicating the towed object towed by the mobile body 30 from the storage unit 54 (step S135). Subsequently, the specification module 556 specifies, from the standard traveling route stored in the storage unit 54, a similar model similar to the type of the aircraft 10 to be generated for which a traveling route is generated (step S136).

Subsequently, the first generation module 557 generates a traveling route for each set of the type of the mobile body 30 to be generated and the type of the aircraft 10, based on the type of the mobile body 30 to be generated indicating a target for which a traveling route indicating a traveling path of the mobile body 30 in the airport of the GSE information acquired by the first acquisition module 551 is generated, the type of the aircraft 10 of the aircraft information acquired by the second acquisition module 552, the coordinates of the departure point and the destination point of the mobile body 30 to be generated for which a traveling route of the point information acquired by the third acquisition module 553 is generated, the standard traveling route indicating a traveling route preset for each set of the type of the mobile body 30 and the type of the aircraft 10 of the standard traveling route information acquired by the fourth acquisition module 554, and the type of the towed object towed by the mobile body 30 to be generated of the towed object information acquired by the fifth acquisition module 555 (step S137).

Subsequently, the first determination module 558 and the second determination module 559 confirm the traveling route generated by the first generation module 557 (step S138). Subsequently, the setting module 561 sets the traveling route for each set of the type of the mobile body 30 to be generated and the type of the aircraft 10, which is generated by the first generation module 557, in the storage unit 54 as the standard traveling route (step S139). The setting module 561 also sets the traveling route for each set of the type of the mobile body 30 to be generated and the type of the aircraft 10, which is corrected by the first correction module 560, in the storage unit 54 as the standard traveling route. When the process of step S139 ends, the control unit 55 of the server 50 ends the present process.

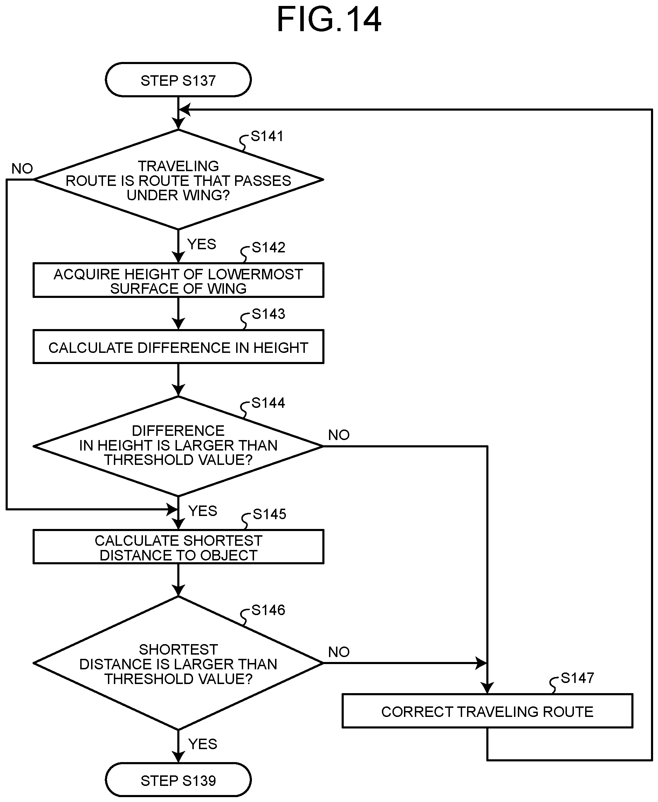

FIG. 14 is a flowchart illustrating an example of a flow of information processing executed by the control unit 55 of the server 50 according to the embodiment. The information processing executed by the control unit 55 of the server 50 illustrated in FIG. 14 describes the details of step S138 illustrated in FIG. 13.

The first determination module 558 determines whether the traveling route generated by the first generation module 557 is a route that passes under the wing of the aircraft 10 to be generated (step S141). Here, if it is determined that the traveling route generated by the first generation module 557 is not a route that passes under the wing of the aircraft 10 to be generated (step S141: No), the control unit 55 of the server 50 proceeds to the process of step S145. On the other hand, if it is determined that the traveling route generated by the first generation module 557 is a route that passes under the wing of the aircraft 10 to be generated (step S141: Yes), the control unit 55 of the server 50 proceeds to the process of step S142.

In step S142, if the traveling route generated by the first generation module 557 is a route that passes under the wing of the aircraft 10 to be generated, the first determination module 558 acquires the height of the lowermost surface of the wing of the aircraft 10 to be generated from the aircraft information acquired by the second acquisition module 552 (step S142). Subsequently, the first determination module 558 calculates a difference value between the height of the lowermost surface of the wing of the aircraft 10 to be generated and the height of the mobile body 30 to be generated or the towed object, which has a larger height in the height direction (step S143).

Subsequently, in step S144, the first determination module 558 determines whether a difference value between the height of the lowermost surface of the wing of the aircraft 10 to be generated and the height of the mobile body 30 to be generated or the towed object, which has a larger height in the height direction, is larger than a predetermined threshold value (step S144). Here, if the first determination module 558 determines that the difference value is smaller than the predetermined threshold value (step S144: No), the control unit 55 of the server 50 proceeds to the process of step S147. On the other hand, if the first determination module 558 determines that the difference value is larger than the predetermined threshold value (step S144: Yes), the control unit 55 of the server 50 proceeds to the process of step S145.

In step S145, the second determination module 559 calculates the shortest distance in the horizontal direction connecting the object B1 located on the traveling route generated by the first generation module 557 and the mobile body 30 to be generated or the towed object (step S145). Subsequently, the second determination module 559 determines whether the calculated shortest distance is larger than a predetermined threshold value (step S146). Here, if the second determination module 559 determines that the calculated shortest distance is smaller than the predetermined threshold value (step S146: No), the control unit 55 of the server 50 proceeds to the process of step S147. On the other hand, if the second determination module 559 determines that the calculated shortest distance is larger than the predetermined threshold value (step S146: Yes), the control unit 55 of the server 50 proceeds to the process of step S139 illustrated in FIG. 13.

In step S147, the first correction module 560 corrects the traveling route generated by the first generation module 557 (step S147). When the process of the step S147 ends, the control unit 55 of the server 50 proceeds to the process of the step S141 again and confirms the traveling route corrected by the first correction module 560.

As described above, in the information processing method executed by the control unit 55 of the server 50 of the present embodiment, the computer generates a traveling route for each set of the type of the GSE to be generated and the type of the aircraft 10, based on the type of the GSE to be generated indicating a target for which the traveling route indicating the traveling path of the GSE in the airport is generated, the type of the aircraft 10, the coordinates of the departure point and the destination point of the GSE to be generated, and the standard traveling route indicating the traveling route preset for each set of the type of the GSE and the type of the aircraft 10.

Thus, the server 50 of the present embodiment can set the standard traveling route by generating the traveling route for each set of the type of the GSE to be generated and the type of the aircraft 10 based on the standard traveling route indicating the preset traveling route, even if the traveling path on which the GSE travels and the stop position of the GSE are changed due to a change in the combination of the parking position, the type of the aircraft 10, and the type of the GSE as in the related art.

In addition, the computer specifies, as a similar model candidate indicating a candidate for a model similar to the type of the aircraft 10 to be generated, the type of the aircraft 10 that matches the types and the number of the GSEs used for the type of the aircraft 10 to be generated from among the types of the aircraft 10 included in the set of the type of the GSE and the type of the aircraft 10, for which the standard traveling route has been set, the computer specifies, as a similar model indicating a model similar to the type of the aircraft 10 to be generated, a similar model candidate having the smallest difference between the size of the similar model candidate and the size of the type of the aircraft 10 to be generated among the specified similar model candidates, and the computer generates the traveling route for each set of the type of the GSE to be generated and the type of the aircraft 10 to be generated based on the standard traveling route corresponding to the specified similar model.

Thus, the server 50 of the present embodiment specifies, for the type of the aircraft 10 to be generated, a similar model similar to the type of the aircraft 10 to be generated, and generates a traveling route for each set of the type of the GSE to be generated and the type of the aircraft 10 to be generated based on the standard traveling route corresponding to the specified similar model.

Further, the computer generates a traveling route for each set of the type of the GSE to be generated and the type of the aircraft 10 based on the type of the towed object towed by the GSE to be generated. Then, when the difference value between the height of the lowermost surface of the wing of the aircraft 10 to be generated and the height of the GSE to be generated or the towed object, which has a larger height in the height direction, is larger than a predetermined threshold value, the computer sets the generated traveling route as the standard traveling route. In addition, when the shortest distance in the horizontal direction connecting the object B1 located on the generated traveling route and the GSE to be generated or the towing object is larger than a predetermined threshold value, the computer sets the generated traveling route as the standard traveling route.

Thus, the remote control terminal 40 of the present embodiment can output the standard traveling route in which the traveling route generated by the server 50 is set to the display unit 43. For example, the operator OP confirms the standard traveling route output to the display unit 43, thereby grasping the traveling route on which the GSE travels even in a case where the combination of the parking position of the aircraft 10, the type of the aircraft 10, and the type of the GSE is different.

Therefore, the remote control terminal 40 and the server 50 of the present embodiment can provide, for each set of the type of the GSE and the model of the aircraft 10, the traveling route on which the GSE travels to a designated position corresponding to the actual parking position of the aircraft 10.

The effects of the embodiments described in the present specification are merely examples and are not limited, and there may be other effects. Modifications will be described below.

### First Modification

For example, the control unit 55 of the server 50 may generate safety area information indicating an aircraft safety area in the airport corresponding to the parking position information indicating the parking position of the aircraft 10, and when the current position of the mobile body 30 approaches the aircraft safety area, the control unit may output the first warning information indicating that the mobile body 30 approaches the aircraft safety area.

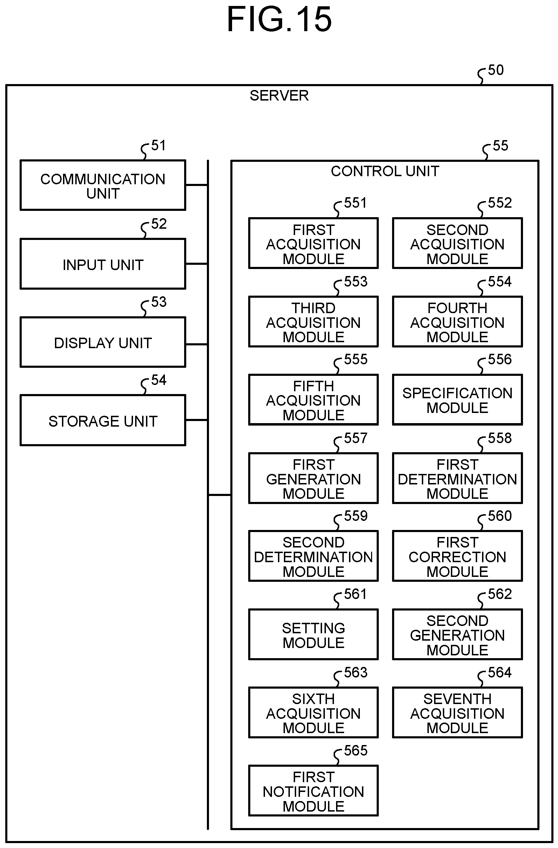

FIG. 15 is a block diagram illustrating an example of a functional configuration of the server 50 according to a first modification. The server 50 according to the first modification includes a second generation module 562, a sixth acquisition module 563, a seventh acquisition module 564, and a first notification module 565 in addition to the functions of the server 50 illustrated in FIG. 6 described above.

The second generation module 562 generates safety area information indicating an aircraft safety area in the airport corresponding to the parking position information indicating the parking position of the aircraft 10. Specifically, the second generation module 562 generates safety area information indicating an aircraft safety area in the airport corresponding to the parking position information indicating the parking position of the aircraft 10, based on the aircraft information acquired by the second acquisition module 552.

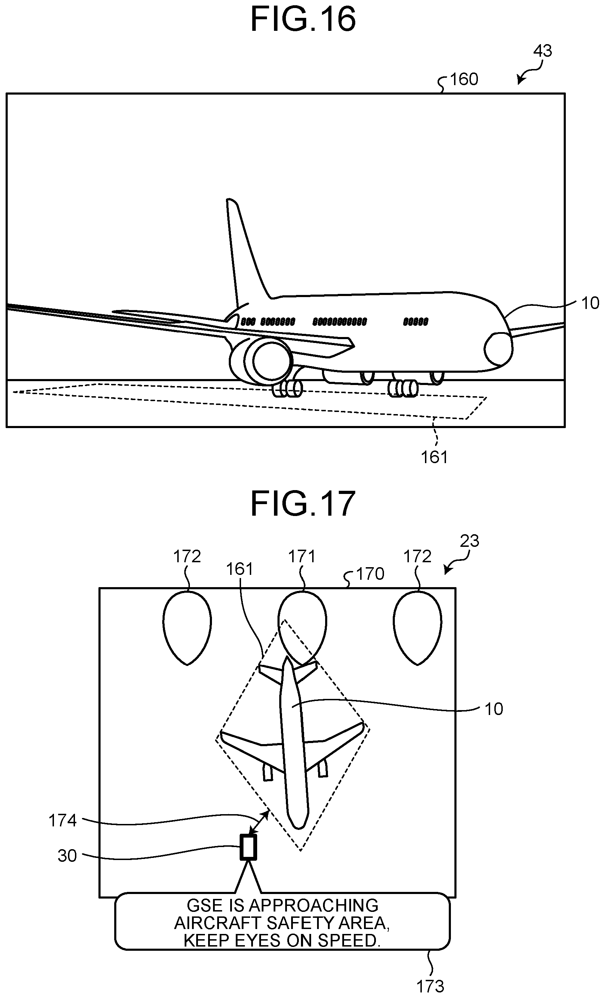

The safety area information includes the parking position of the aircraft 10 and the aircraft safety area in the airport corresponding to the parking position of the aircraft 10. Then, the second generation module 562 stores the generated safety area information in the storage unit 54, and the output module 452 of the remote control terminal 40 outputs the safety area information received from the server 50 to the display unit 43. Here, the safety area information will be described with reference to FIG. 16.

FIG. 16 is a schematic diagram illustrating an example of a display screen 160 displayed by the remote control terminal 40 according to the first modification. On the display screen 160 illustrated in FIG. 16, an image of the aircraft 10 captured by the mobile body 30 and an aircraft safety area 161 in the airport corresponding to the parking position of the aircraft 10 are displayed. Thus, the operator OP can grasp the safety area corresponding to the parking position of the aircraft 10.

Returning to FIG. 15, the sixth acquisition module 563 acquires the GSE position information. Specifically, the sixth acquisition module 563 acquires the current position of the mobile body 30 included in the GSE position information from the mobile body information transmitted by the mobile body 30.

The seventh acquisition module 564 acquires safety area information. Specifically, the seventh acquisition module 564 acquires the safety area information generated by the second generation module 562.

When the current position of the GSE approaches the aircraft safety area 161, the first notification module 565 outputs first warning information indicating that the GSE approaches the aircraft safety area 161. Specifically, the first notification module 565 determines whether the current position of the mobile body 30 included in the GSE position information acquired by the sixth acquisition module 563 approaches the aircraft safety area 161 of the safety area information acquired by the seventh acquisition module 564.

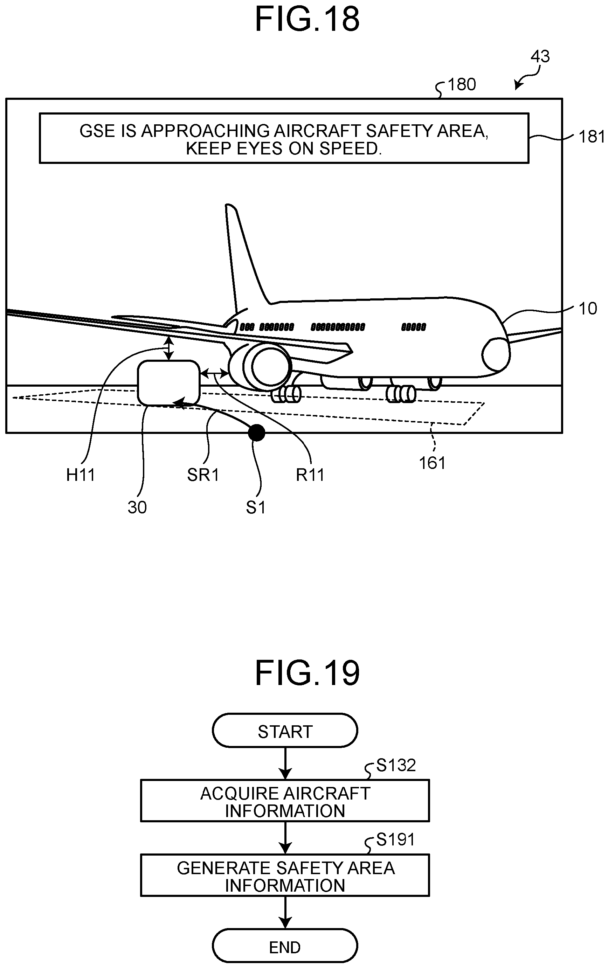

When the current position of the mobile body 30 approaches the aircraft safety area 161, the first notification module 565 outputs the first warning information indicating that the mobile body 30 approaches the aircraft safety area 161 to the aircraft control system 20 and the remote control terminal 40. Here, the first warning information will be described with reference to FIGS. 17 and 18.

FIG. 17 is a schematic diagram illustrating an example of a display screen 170 displayed by the aircraft control system 20 according to the first modification. The display screen 170 illustrated in FIG. 17 illustrates the aircraft 10, the mobile body 30, the aircraft safety area 161, a parking position 171 of the aircraft 10, a parking position 172 proximate to the parking position 171, first warning information 173, and an approach distance 174 between the aircraft 10 and the mobile body 30. The first warning information 173 is a text indicating a sentence such as "GSE is approaching an aircraft safety area, keep eyes on speed". Thus, for example, the air-traffic controller can grasp the current positional relationship between the aircraft 10 and the mobile body 30 that travels in the airport.

FIG. 18 is a schematic diagram illustrating an example of a display screen 180 displayed by the remote control terminal 40 according to the first modification. The display screen 180 illustrated in FIG. 18 is a display screen in which the following information is added to the display screen 160 illustrated in FIG. 16.

The display screen 180 illustrates the aircraft 10, the mobile body 30, an aircraft safety area 161, first warning information 181, a distance H11 between the aircraft 10 and the mobile body 30 in the height direction, a distance R11 between the aircraft 10 and the mobile body 30 in the horizontal direction, a departure point S1 of the mobile body 30, and a standard traveling route SR1 of the mobile body 30. The first warning information 181 is a text indicating a sentence such as "GSE is approaching an aircraft safety area, keep eyes on speed". Thus, for example, the operator OP can grasp the current positional relationship between the aircraft 10 and the mobile body 30 that travels in the airport.

An example of a flow of information processing executed by the control unit 55 of the server 50 of the first modification will now be described. FIG. 19 is a flowchart illustrating an example of a flow of information processing executed by the control unit 55 of the server 50 according to the first modification. In the process of the flowchart illustrated in FIG. 19, a process of generating the safety area information will be particularly described. Note that step S132 of the flowchart illustrated in FIG. 19 is the same process as step S132 illustrated in FIG. 13, and thus a description thereof will be omitted.

In step S191, the second generation module 562 generates safety area information indicating the aircraft safety area 161 in the airport corresponding to the parking position information indicating the parking position of the aircraft 10 based on the aircraft information acquired by the second acquisition module 552. When the process of step S191 ends, the control unit 55 of the server 50 ends the present process.

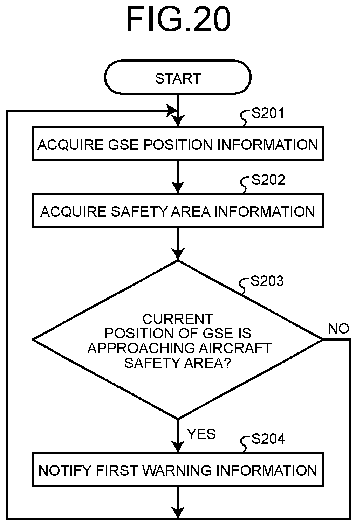

FIG. 20 is a flowchart illustrating an example of a flow of information processing executed by the control unit 55 of the server 50 according to the first modification. In the process of the flowchart illustrated in FIG. 20, a process of notifying the first warning information 173 will be particularly described.

The sixth acquisition module 563 acquires the current position of the GSE included in the GSE position information from the mobile body information transmitted by the mobile body 30 (step S201). Subsequently, the seventh acquisition module 564 acquires the safety area information generated by the second generation module 562 (step S202). Subsequently, the first notification module 565 determines whether the current position of the GSE (the mobile body 30) included in the GSE position information acquired by the sixth acquisition module 563 approaches the aircraft safety area 161 of the safety area information acquired by the seventh acquisition module 564 (step S203).

Here, if the first notification module 565 determines that the current position of the mobile body 30 does not approach the aircraft safety area 161 (step S203: No), the control unit 55 of the server 50 proceeds to step S201. On the other hand, if the first notification module 565 determines that the current position of the mobile body 30 approaches the aircraft safety area 161 (step S203: Yes), the control unit 55 of the server 50 proceeds to step S204.

In step S204, the first notification module 565 outputs the first warning information 173 indicating that the mobile body 30 approaches the aircraft safety area 161 to the aircraft control system 20 and the remote control terminal 40. When the process of step S204 ends, the control unit 55 of the server 50 proceeds to step S201 and continues the present process until the traveling of the mobile body 30 is stopped.

As described above, in the information processing method executed by the control unit 55 of the server 50 of the first modification, the safety area information indicating the aircraft safety area 161 in the airport corresponding to the parking position information indicating the parking position of the aircraft 10 is generated, and when the current position of the GSE approaches the aircraft safety area 161, the first warning information 173 indicating that the GSE approaches the aircraft safety area 161 is output. Then, the aircraft control system 20 and the remote control terminal 40 output the first warning information 173 to the display unit. Thus, the air-traffic controller or the operator OP can grasp the current positional relationship between the aircraft 10 and the GSE that travels in the airport. Note that the mode in which the control unit 55 of the server 50 of the first modification outputs the first warning information is not limited to being applied to the standard traveling route according to the embodiment, and can also be applied to any traveling route.

### Second Modification

For example, the control unit 55 of the server 50 may calculate a deviation amount indicating a deviation between the position of the aircraft 10 and the standard position of the aircraft 10 corresponding to the standard traveling route, based on the inclination of the aircraft 10, correct the passing point group of the standard traveling route according to the deviation amount when the deviation amount is within a specified range, and set the corrected standard traveling route as the standard traveling route.

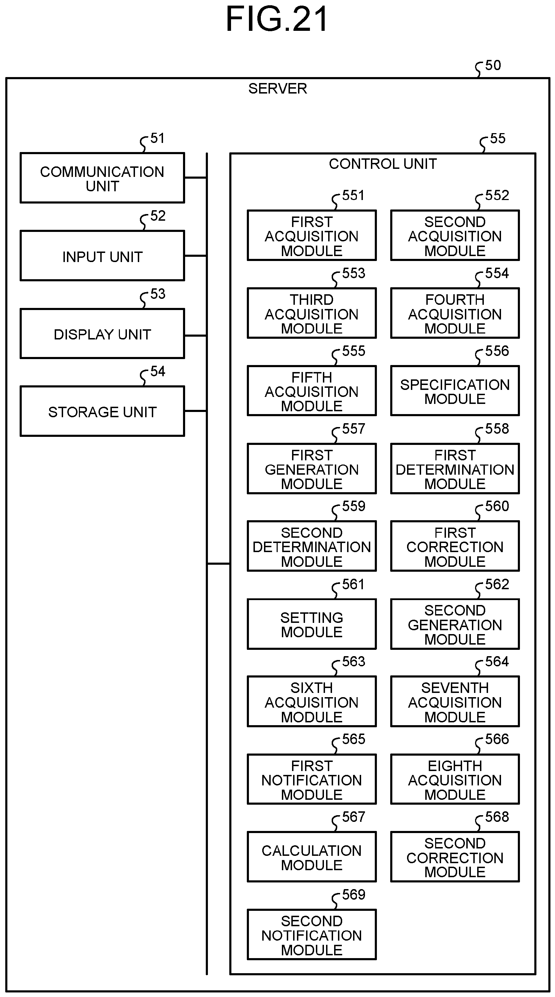

FIG. 21 is a block diagram illustrating an example of a functional configuration of the server 50 according to the second modification. The server 50 according to the second modification includes an eighth acquisition module 566, a calculation module 567, a second correction module 568, and a second notification module 569 in addition to the functions of the server 50 illustrated in FIGS. 6 and 15 described above.

The eighth acquisition module 566 acquires sensor information. Specifically, the eighth acquisition module 566 acquires the position of the aircraft 10 and the inclination of the aircraft 10 included in the sensor information from the aircraft control system 20.

The calculation module 567 calculates a deviation amount indicating a deviation between the position of the aircraft 10 and the standard position of the aircraft 10 corresponding to the standard traveling route, based on the inclination of the aircraft 10. Specifically, the calculation module 567 calculates a deviation amount indicating a deviation between the position of the aircraft 10 acquired by the eighth acquisition module 566 and the standard position of the aircraft 10 corresponding to the standard traveling route stored in the storage unit 54, based on the inclination of the aircraft 10.

For example, the calculation module 567 sets the center position of the aircraft 10 at the standard position included in the standard traveling route information as an origin, and calculates a deviation amount from the deviation (X coordinate, Y coordinate) of the center position of the actually parked aircraft 10 on the two-dimensional coordinates and the inclination between the center position of the aircraft 10 at the standard position and the center position of the actually parked aircraft 10.

When the deviation amount is within the specified range, the second correction module 568 corrects the passing point group of the standard traveling route according to the deviation amount. Specifically, when the deviation amount calculated by the calculation module 567 is within the specified range, the second correction module 568 corrects the passing point group of the standard traveling route according to the deviation amount. The case of being within the specified range is a range in which the standard traveling route is not significantly changed. Note that the process of correcting the passing point group of the standard traveling route, which is the process corrected by the second correction module 568, is the same as the process corrected by the first correction module 560 described above, and thus a detailed description thereof will be omitted.

The first determination module 558 and the second determination module 559 confirm the standard traveling route corrected by the second correction module 568. The setting module 561 sets the standard traveling route corrected by the second correction module 568 in the storage unit 54 as the standard traveling route.

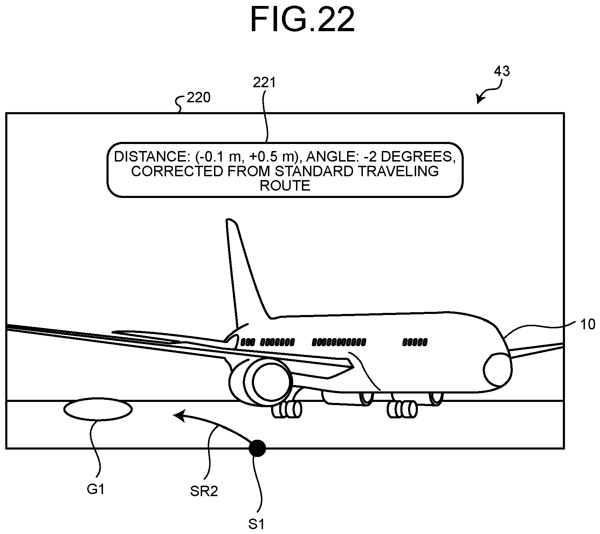

The second notification module 569 outputs standard traveling route correction information. Specifically, the second notification module 569 outputs the standard traveling route correction information regarding the standard traveling route corrected by the second correction module 568 to the remote control terminal 40. Here, the standard traveling route correction information will be described with reference to FIG. 22.

FIG. 22 is a schematic diagram illustrating an example of a display screen 220 displayed by the remote control terminal 40 according to the second modification. The display screen 220 illustrated in FIG. 22 illustrates an image of the aircraft 10 captured by the mobile body 30, standard traveling route correction information 221, the departure point S1 of the mobile body 30, a destination point G1 of the mobile body 30, and a corrected standard traveling route SR2 of the mobile body 30. The standard traveling route correction information 221 is a text indicating a sentence such as "Distance: (-0.1 m, +0.5 m), angle: -2 degrees, corrected from standard traveling route". Thus, for example, the operator OP can grasp the corrected standard traveling route of the mobile body 30.

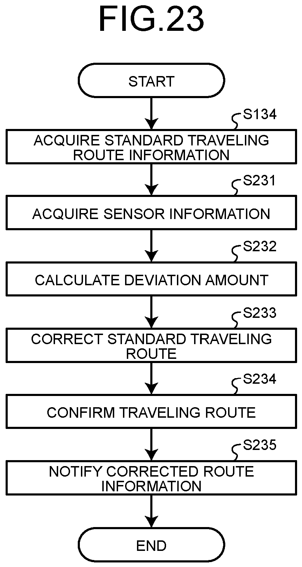

An example of a flow of information processing executed by the control unit 55 of the server 50 of the second modification will now be described. FIG. 23 is a flowchart illustrating an example of a flow of information processing executed by the control unit 55 of the server 50 according to the second modification. In the process of the flowchart illustrated in FIG. 23, a process of correcting the standard traveling route will be particularly described. Note that step S134 of the flowchart illustrated in FIG. 23 is the same process as step S134 illustrated in FIG. 13, and thus a description thereof will be omitted.

In step S231, the eighth acquisition module 566 acquires the position of the aircraft 10 and the inclination of the aircraft 10 included in the sensor information from the aircraft control system 20 (step S231). Subsequently, the calculation module 567 calculates a deviation amount indicating a deviation between the position of the aircraft 10 acquired by the eighth acquisition module 566 and the standard position of the aircraft 10 corresponding to the standard traveling route stored in the storage unit 54, based on the inclination of the aircraft 10(step S232).

Subsequently, when the deviation amount calculated by the calculation module 567 is within the prescribed range, the second correction module 568 corrects the passing point group of the standard traveling route according to the deviation amount (step S233). Subsequently, the first determination module 558 and the second determination module 559 confirm the standard traveling route corrected by the second correction module 568 (step S234). Then, the setting module 561 sets the standard traveling route corrected by the second correction module 568 in the storage unit 54 as the standard traveling route.

The second notification module 569 outputs the standard traveling route correction information 221 regarding the standard traveling route corrected by the second correction module 568 to the remote control terminal 40 (step S235). When the process of step S235 ends, the control unit 55 of the server 50 ends the present process.

As described above, the information processing method executed by the control unit 55 of the server 50 of the second modification is to calculate the deviation amount indicating the deviation between the position of the aircraft 10 and the standard position of the aircraft 10 corresponding to the standard traveling route, based on the inclination of the aircraft 10, to correct the passing point group of the standard traveling route according to the deviation amount when the deviation amount is within the specified range, and to set the corrected standard traveling route as the standard traveling route. Then, the control unit 55 of the server 50 outputs the standard traveling route correction information 221 regarding the corrected standard traveling route to the remote control terminal 40. Then, the remote control terminal 40 outputs the standard traveling route correction information 221 to the display unit 43. Thus, for example, the operator OP can grasp the corrected standard traveling route of the mobile body 30.

### Third Modification

For example, the control unit 55 of the server 50 according to the third modification may output no-entry information indicating that the GSE cannot enter the airport based on the latest operating condition of the aircraft 10 in the airport and the parking position information indicating the parking position of the aircraft 10. In addition, when there is a possibility that the GSE approaches a no-entry region, the control unit 55 of the server 50 according to the third modification may output second warning information indicating a possibility that the GSE approaches the no-entry region.

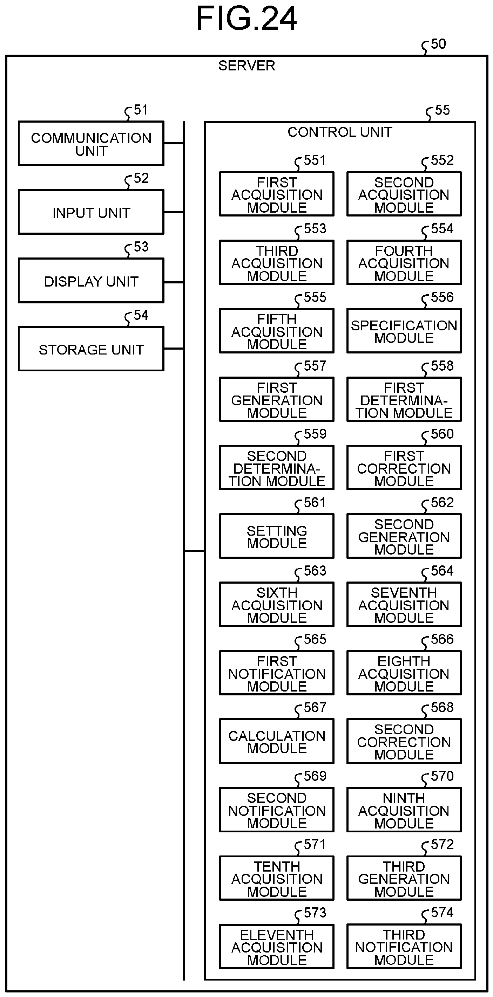

FIG. 24 is a block diagram illustrating an example of a functional configuration of the server 50 according to the third modification. The server 50 according to the third modification includes a ninth acquisition module 570, a tenth acquisition module 571, a third generation module 572, an eleventh acquisition module 573, and a third notification module 574 in addition to the functions of the server 50 illustrated in FIGS. 6, 15, and 21 described above.

The ninth acquisition module 570 acquires operation information. Specifically, the ninth acquisition module 570 acquires the latest operating condition of the aircraft 10 in the airport, which is included in the operation information of the aircraft information, from the aircraft control system 20.

The tenth acquisition module 571 acquires parking information indicating the parking position of the aircraft 10. Specifically, the tenth acquisition module 571 acquires parking information indicating the parking position of the aircraft 10 included in the aircraft information from the aircraft control system 20.

The third generation module 572 generates no-entry information indicating that the GSE cannot enter the airport based on the latest operating condition of the aircraft 10 in the airport and the parking position information indicating the parking position of the aircraft 10. Specifically, the third generation module 572 generates no-entry information indicating that the mobile body 30 cannot enter the airport based on the latest operating condition of the aircraft 10 in the airport acquired by the ninth acquisition module 570 and the parking position information indicating the parking position of the aircraft 10 acquired by the tenth acquisition module 571. Then, the third generation module 572 stores the generated no-entry information in the storage unit 54.

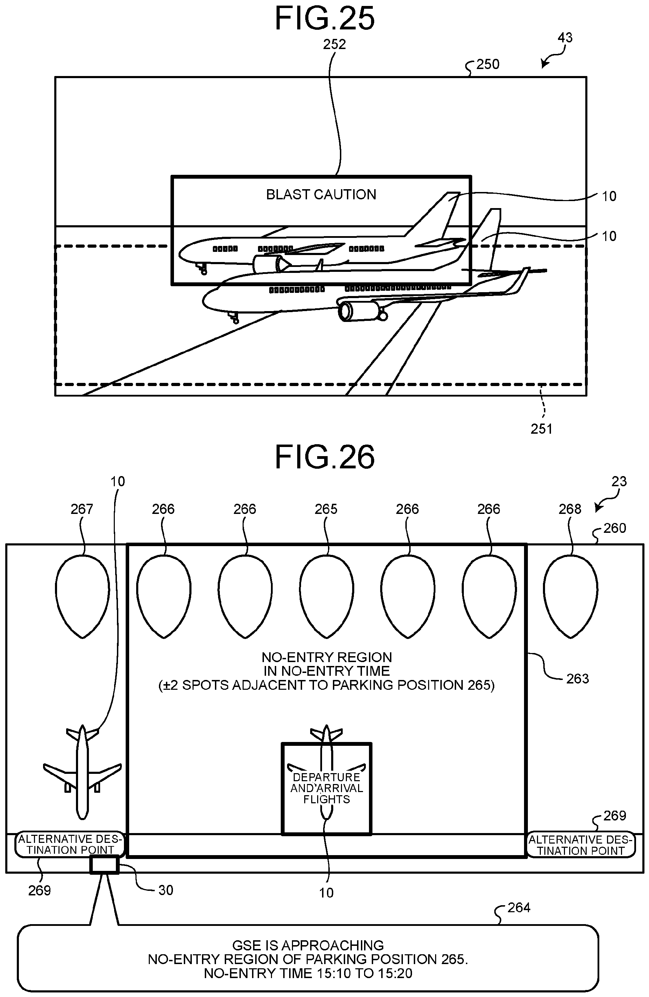

The no-entry information includes a no-entry region that is a region where the mobile body 30 cannot enter the airport, and an event that may occur in the airport. Here, the no-entry information will be described with reference to FIG. 25.

FIG. 25 is a schematic diagram illustrating an example of a display screen 250 displayed by the remote control terminal 40 according to the third modification. On the display screen 250 illustrated in FIG. 25, an image of the aircraft 10 captured by the mobile body 30, a no-entry region 251 that is a region where the mobile body 30 cannot enter the airport, and an event 252 that may occur in the airport are displayed. The event 252 is a text indicating a sentence such as "Blast caution". Thus, the operator OP can grasp the no-entry region 251 indicating a region where the mobile body 30 cannot enter the airport. Note that the no-entry information may include a no-entry time during which the GSE cannot enter the airport.

Returning to FIG. 24, the eleventh acquisition module 573 acquires no-entry information. Specifically, the eleventh acquisition module 573 acquires the no-entry information generated by the third generation module 572.

When there is a possibility that the GSE approaches the no-entry region, the third notification module 574 outputs second warning information indicating a possibility that the GSE approaches the no-entry region. Specifically, the third notification module 574 determines whether the current position of the mobile body 30 included in the GSE position information acquired by the sixth acquisition module 563 approaches the no-entry region of the no-entry information acquired by the eleventh acquisition module 573.

Then, when the current position of the mobile body 30 approaches the no-entry region, the third notification module 574 outputs second warning information indicating a possibility that the mobile body 30 approaches the no-entry region to the aircraft control system 20. Here, the second warning information will be described with reference to FIG. 26.

FIG. 26 is a schematic diagram illustrating an example of a display screen 260 displayed by the aircraft control system 20 according to the third modification. The display screen 260 illustrated in FIG. 26 illustrates the aircraft 10, the mobile body 30, a no-entry region 263, second warning information 264, a parking position 265, a parking position 266, a parking position 267, a parking position 268, and an alternative destination point 269 where the mobile body 30 waits during the no-entry time. The second warning information 264 corresponds to the aircraft 10 parked at the parking position 265.

The no-entry region 263 indicates a region where the mobile body 30 cannot enter the airport, and includes a text indicating a sentence such as "No-entry region in no-entry time (±2 spots adjacent to the parking position 265)". The second warning information 264 is a text indicating a sentence such as "GSE is approaching the no-entry region of the parking position 265. No-entry time 15:10 to 15:20".

Thus, for example, the air-traffic controller can grasp the current positional relationship between the no-entry region 263 and the mobile body 30 that travels in the airport. In addition, the air-traffic controller can instruct, for example, the operator OP to move the mobile body 30 traveling in the airport to the alternative destination point 269. Note that, when the current position of the mobile body 30 approaches the no-entry region 263, the third notification module 574 may output the second warning information 264 indicating the possibility that the mobile body 30 approaches the no-entry region 263 to the remote control terminal 40.

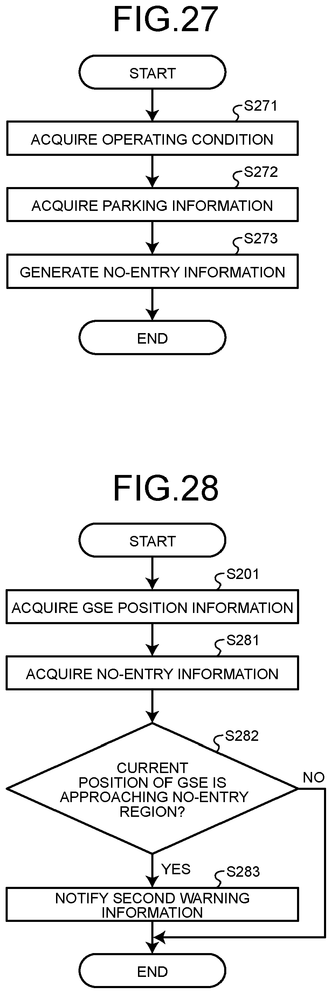

An example of a flow of information processing executed by the control unit 55 of the server 50 of the third modification will now be described. FIG. 27 is a flowchart illustrating an example of a flow of information processing executed by the control unit 55 of the server 50 according to the third modification. In the process of the flowchart illustrated in FIG. 27, a process of generating no-entry information will be particularly described.

The ninth acquisition module 570 acquires the latest operating condition of the aircraft 10 in the airport, which is included in the operation information of the aircraft information, from the aircraft control system 20 (step S271). Subsequently, the tenth acquisition module 571 acquires parking information indicating the parking position of the aircraft 10 included in the aircraft information from the aircraft control system 20 (step S272).

Subsequently, the third generation module 572 generates no-entry information indicating that the mobile body 30 cannot enter the airport based on the latest operating condition of the aircraft 10 in the airport acquired by the ninth acquisition module 570 and the parking position information indicating the parking position of the aircraft 10 acquired by the tenth acquisition module 571 (step S273). When the process of step S273 ends, the control unit 55 of the server 50 ends the present process.

FIG. 28 is a flowchart illustrating an example of a flow of information processing executed by the control unit 55 of the server 50 according to the third modification. In the process of the flowchart illustrated in FIG. 28, a process of notifying the second warning information 264 will be particularly described. Note that step S132 of the flowchart illustrated in FIG. 28 is the same process as step S201 illustrated in FIG. 20, and thus a description thereof will be omitted.

In step S281, the eleventh acquisition module 573 acquires the no-entry information generated by the third generation module 572 (step S281). Subsequently, the third notification module 574 determines whether the current position of the GSE (the mobile body 30) included in the GSE position information acquired by the sixth acquisition module 563 approaches the no-entry region of the no-entry information acquired by the eleventh acquisition module 573 (step S282).

Here, if the third notification module 574 determines that the current position of the mobile body 30 does not approach the no-entry region (step S282: No), the control unit 55 of the server 50 ends the present process. On the other hand, if the third notification module 574 determines that the current position of the mobile body 30 approaches the no-entry region (step S282: Yes), the control unit 55 of the server 50 proceeds to step S283.

In step S283, the third notification module 574 outputs the second warning information 264 indicating the possibility that the mobile body 30 approaches the no-entry region to the aircraft control system 20 (step S283). When the process of step S283 ends, the control unit 55 of the server 50 ends the present process.

As described above, in the information processing method executed by the control unit 55 of the server 50 of the third modification, the no-entry information indicating that the GSE cannot enter the airport is output based on the latest operating condition of the aircraft 10 and the parking position information indicating the parking position of the aircraft 10. In addition, the no-entry information includes at least one of a no-entry region which is a region in which the GSE cannot enter the airport and a no-entry time during which the GSE cannot enter the airport.

Further, in the information processing method executed by the control unit 55 of the server 50 of the third modification, when there is a possibility that the GSE approaches the no-entry region, the second warning information 264 indicating the possibility that the GSE approaches the no-entry region is output. Then, the aircraft control system 20 and the remote control terminal 40 output the second warning information 264 to the display unit. Thus, the air-traffic controller or the operator OP can grasp the current positional relationship between the aircraft 10 and the GSE that travels in the airport, and can grasp that the GSE indicates the possibility of approaching the no-entry region.

### Fourth Modification

For example, when an on-site worker who works in the airport is present in the vicinity on the traveling route of the GSE, a control unit 55 of a server 50 according to a fourth modification may output third warning information indicating that the GSE approaches the on-site worker to the terminal device possessed by the on-site worker or the remote control terminal 40. Here, the vicinity on the traveling route refers to, for example, a case where a distance threshold value perpendicular to the standard traveling route is set as, for example, 1[m]. Note that the value of the distance threshold is not limited thereto. In the fourth modification, a process after the GSE departs from the parking position will be described.

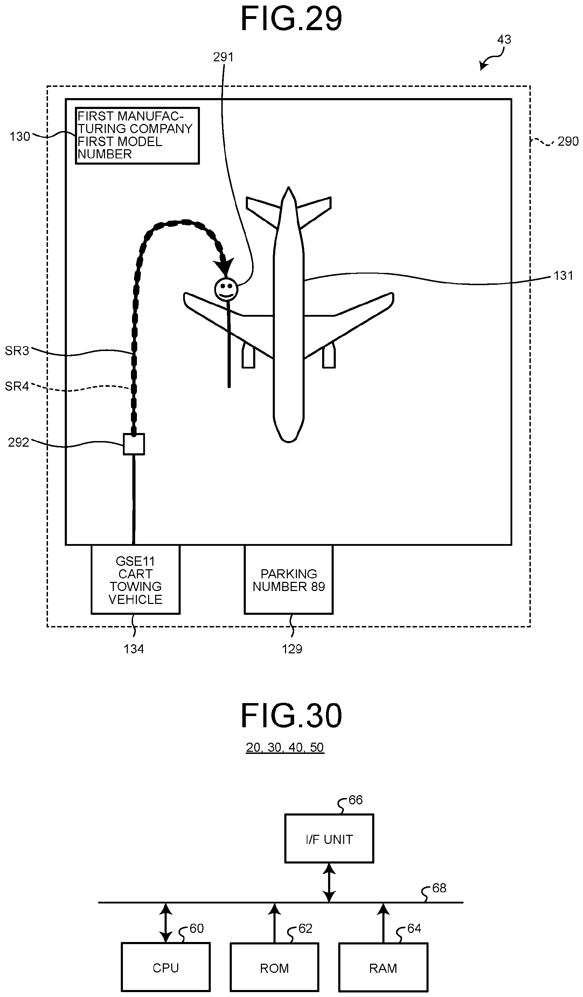

FIG. 29 is a schematic diagram illustrating an example of a display screen 290 displayed by the remote control terminal 40 according to the fourth modification. The display screen 290 displayed by the display unit 43 illustrated in FIG. 29 illustrates an icon 129 indicating the parking number "89" of the position where the aircraft 10 is parked, an icon 130 indicating the model "first manufacturing company first model number" of the aircraft 10, an icon 131 of the aircraft 10 corresponding to the traveling route, an icon 134 indicating the type "GSE11 cart towing vehicle" of the mobile body 30, a current position 291 of the on-site worker present in the airport, a current position 292 of the mobile body 30 such as the GSE11 cart towing vehicle, a standard traveling route SR3 of the mobile body 30 of the type "GSE11 cart towing vehicle" of the mobile body 30, and a route SR4 obtained by adding a distance threshold width (zone) perpendicular to the route on which the mobile body 30 is actually scheduled to travel.

For example, the fourth acquisition module 554 acquires the traveling route of the mobile body 30 included in the standard traveling route information stored in the storage unit 54. In addition, the sixth acquisition module 563 acquires the current position 291 of the on-site worker included in the on-site worker position information indicating the position information of the on-site worker. Here, the on-site worker position information is transmitted from, for example, a terminal device of the on-site worker used by the on-site worker. Then, the sixth acquisition module 563 acquires the current position 292 of the mobile body 30 included in the GSE position information from the mobile body information transmitted by the mobile body 30. In addition, the sixth acquisition module 563 calculates the average moving speed of the mobile body 30 during traveling based on the time-series change in the current position of the mobile body 30.

The third generation module 572 calculates the arrival time until the mobile body 30 reaches the vicinity of the on-site worker based on the traveling route of the mobile body 30 included in the standard traveling route information acquired by the fourth acquisition module 554, the current position 291 of the on-site worker included in the on-site worker position information acquired by the sixth acquisition module 563, the current position of the mobile body 30 included in the GSE position information, and the average moving speed calculated by the sixth acquisition module 563. Subsequently, the third notification module 574 determines whether the arrival time calculated by the third generation module 572 is less than a predetermined time. Here, the predetermined time is a set value (threshold value) indicating a margin time until the vehicle reaches the vicinity of the worker. The set value includes, for example, two types of a caution and a warning. For example, the caution is 30 seconds remaining until the vehicle arrives, and the warning is 10 seconds remaining until the vehicle arrives. The predetermined time is not limited to thereto.

Then, when the arrival time calculated by the third generation module 572 is less than the predetermined time, the third notification module 574 outputs the third warning information indicating that the mobile body 30 is approaching the on-site worker to the terminal device possessed by the on-site worker or the remote control terminal 40.

The third warning information includes, for example, a text indicating a sentence such as "A vehicle is approaching an on-site worker!", output of the text by voice, a voice reading the text, a warning sound, or the like. Note that the predetermined time may be set according to the average moving speed of the mobile body 30 or the distance between the mobile body 30 and the on-site worker. Note that the mode in which the third warning information is output at predetermined time intervals may be changed. For example, the volume of the audio output may be increased as the predetermined time is shorter.

Note that the fourth modification has described the mode in which the mobile body 30 outputs the third warning information after the departure from the parking position, but is not limited thereto. For example, even when the mobile body 30 is before the departure from the parking position, the fourth modification can be applied by calculating the time at which the mobile body 30 reaches the vicinity of the on-site worker from the scheduled departure time and the departure position.

As described above, in the information processing method executed by the control unit 55 of the server 50 of the fourth modification, when the on-site worker who works in the airport is present in the vicinity on the traveling route of the GSE, the third warning information indicating that the GSE is approaching the on-site worker is output. In addition, in the information processing method executed by the control unit 55 of the server 50 of the fourth modification, the third warning information is output based on the traveling route of the GSE, the current position 291 of the on-site worker included in the on-site worker position information indicating the position information of the on-site worker, the current position of the GSE included in the GSE position information indicating the position information of the GSE, and the average moving speed of the GSE during traveling.

Further, in the information processing method executed by the control unit 55 of the server 50 of the fourth modification, the arrival time until the GSE reaches the vicinity of the on-site worker is calculated based on the traveling route of the GSE, the current position of the on-site worker, the current position of the GSE, and the average moving speed of the GSE during traveling, and the third warning information is output when the calculated arrival time is less than the predetermined time. Then, the terminal device of the on-site worker and the remote control terminal 40 output the third warning information to the display unit or output a warning sound. Thus, the on-site worker or the operator OP can grasp the current positional relationship between the on-site worker and the GSE that travels in the airport, and can grasp the approach of the mobile body 30 to the on-site worker.

An example of a hardware configuration of the aircraft control system 20, the mobile body 30, the remote control terminal 40, and the server 50 according to the above-described embodiment and modifications will now be described.

FIG. 30 is a block diagram illustrating an example of a hardware configuration of the aircraft control system 20, the mobile body 30, the remote control terminal 40, and the server 50 of the information processing system 1 according to the embodiment and the modifications.

The aircraft control system 20, the mobile body 30, the remote control terminal 40, and the server 50 of the above-described embodiment and modifications have a hardware configuration in which a CPU 60, a ROM 62, a RAM 64, an I/F UNIT 66, and the like are connected to each other by a bus 68 and a normal computer is used.

The CPU 60 is an arithmetic device that controls the aircraft control system 20, the mobile body 30, the remote control terminal 40, and the server 50 according to the above-described embodiment and modifications. The ROM 62 stores a program and the like for implementing information processing by the CPU 60. The RAM 64 stores information necessary for various processes by the CPU 60. The I/F UNIT 66 is an interface that is connected to a storage unit, an input unit, a display unit, a sensor, a communication unit, and the like to transmit and receive data.

In the aircraft control system 20, the mobile body 30, the remote control terminal 40, and the server 50 according to the above-described embodiment and modifications, the CPU 60 reads a program from the ROM 62 onto the RAM 64 and executes the program, whereby the functional units described above are implemented on the computer.

Note that the program for executing each of the above-described processes executed by the aircraft control system 20, the mobile body 30, the remote control terminal 40, and the server 50 according to the above-described embodiment and modifications may be stored in a hard disk drive (HDD). In addition, the program for executing each of the above-described processes executed by the aircraft control system 20, the mobile body 30, the remote control terminal 40, and the server 50 according to the above-described embodiment and modifications may be provided by being incorporated in the ROM 62 in advance.

In addition, the program for executing the above-described processes executed by the aircraft control system 20, the mobile body 30, the remote control terminal 40, and the server 50 of the above-described embodiment and modifications may be provided as a computer program product by being stored in a computer-readable storage medium such as a CD-ROM, a CD-R, a memory card, a digital versatile disk (DVD), or a flexible disk (FD) in a file of an installable format or an executable format. The program for executing the information processing executed by the aircraft control system 20, the mobile body 30, the remote control terminal 40, and the server 50 of the above-described embodiment and modifications may be stored on a computer connected to a network such as the Internet and provided by being downloaded via the network. In addition, the program for executing the information processing executed by the aircraft control system 20, the mobile body 30, the remote control terminal 40, and the server 50 of the above-described embodiment and modifications may be provided or distributed via a network such as the Internet.

According to the present disclosure, it is possible to provide, for each set of a type of GSE and a model of an aircraft, a traveling route on which the GSE travels to a designated position corresponding to an actual parking position of an aircraft. Note that the effects described herein are not necessarily limited and may be any of the effects described in the present specification.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An information processing method comprising:
generating, by a computer, a traveling route for each set of a type of ground support equipment (GSE) (30) to be generated and a type of an aircraft (10), based on the type of the GSE (30) to be generated indicating a target for which the traveling route indicating a traveling path of the GSE (30) in an airport is generated, the type of the aircraft (10), coordinates of a departure point and a destination point of the GSE (30) to be generated, and a standard traveling route indicating the traveling route preset for each set of the type of the GSE (30) and the type of the aircraft (10).

2. The information processing method according to claim 1, further comprising:
specifying, by the computer, as similar model candidates indicating candidates for a model similar to the type of the aircraft (10) to be generated, the type of the aircraft (10) that matches types and a number of GSEs (30) used for the type of the aircraft (10) to be generated from among types of the aircraft (10) included in the set of the type of the GSE (30) and the type of the aircraft (10), for which the standard traveling route is set;
specifying, by the computer, as a similar model indicating a model similar to the type of the aircraft (10) to be generated, a similar model candidate having a smallest difference between a size of the similar model candidate and a size of the type of the aircraft (10) to be generated, from among the specified similar model candidates; and
generating, by the computer, the traveling route for each set of the type of the GSE (30) to be generated and the type of the aircraft (10) to be generated based on the standard traveling route corresponding to the specified similar model.

3. The information processing method according to claim 1 or 2, further comprising:
generating, by the computer, the traveling route for each set of the type of the GSE (30) to be generated and the type of the aircraft (10) based on a type of a towed object towed by the GSE (30) to be generated.

4. The information processing method according to claim 3, further comprising:
setting, by the computer, the generated traveling route as the standard traveling route when a difference value between a height of a lowermost surface of a wing of the aircraft (10) to be generated and a height of the GSE (30) to be generated or the towed object, which has a larger height in a height direction, is larger than a predetermined threshold value.

5. The information processing method according to claim 4, further comprising:
when a difference value between the height of the lowermost surface of the wing of the aircraft (10) to be generated and the height of the GSE (30) to be generated or the towed object, which has the larger height in the height direction, is smaller than the predetermined threshold value, correcting, by the computer, the generated traveling route such that the difference value becomes larger than the predetermined threshold value by being moved away from a center of the aircraft (10) to be generated, and setting, by the computer, the corrected traveling route as the standard traveling route.

6. The information processing method according to claim 3, further comprising:
when a shortest distance in a horizontal direction connecting an object located on the generated traveling route and the GSE (30) to be generated or the towed object is larger than a predetermined threshold value, settings, by the computer, the generated traveling route as the standard traveling route.

7. The information processing method according to claim 6, further comprising:
when the shortest distance in the horizontal direction connecting the object located on the generated traveling route and the GSE (30) to be generated or the towed object is smaller than the predetermined threshold value, correcting, by the computer, the generated traveling route such that the shortest distance becomes larger than the predetermined threshold value by being moved away from the object, and setting, by the computer, the corrected traveling route as the standard traveling route.

8. The information processing method according to claim 1 or 2, further comprising:
generating, by the computer, safety area information indicating an aircraft safety area in the airport corresponding to parking position information indicating a parking position of the aircraft (10), and outputting, by the computer, first warning information indicating that the GSE (30) approaches the aircraft safety area when a current position of the GSE (30) approaches the aircraft safety area.

9. The information processing method according to claim 1 or 2, further comprising:
calculating, by the computer, a deviation amount indicating a deviation between a position of the aircraft (10) and a standard position of the aircraft (10) corresponding to the standard traveling route based on an inclination of the aircraft (10), correcting, by the computer, a passing point group of the standard traveling route according to the deviation amount when the deviation amount is within a specified range, and setting, by the computer, the corrected standard traveling route as the standard traveling route.

10. The information processing method according to claim 1 or 2, further comprising:
outputting, by the computer, no-entry information indicating that the GSE (30) is not able to enter the airport based on a latest operating condition of the aircraft (10) in the airport and parking position information indicating a parking position of the aircraft (10), and
the no-entry information includes at least one of a no-entry region that is a region where the GSE (30) is not able to enter the airport, an event that may occur in the airport, and a no-entry time during which the GSE (30) is not able to enter the airport.

11. The information processing method according to claim 10, further comprising:
when there is a possibility that the GSE (30) approaches the no-entry region, outputting, by the computer, second warning information indicating a possibility that the GSE (30) approaches the no-entry region.

12. The information processing method according to claim 1 or 2, further comprising:
when an on-site worker who works in the airport is present in a vicinity on a traveling route of the GSE (30), outputting, by the computer, third warning information indicating that the GSE (30) is approaching the on-site worker.

13. The information processing method according to claim 12, further comprising:
outputting, by the computer, the third warning information based on the traveling route of the GSE (30), a current position of the on-site worker included in on-site worker position information indicating position information of the on-site worker, a current position of the GSE (30) included in GSE position information indicating position information of the GSE, and an average moving speed of the GSE during traveling.

14. An information processing program causing a computer to perform:
generating a traveling route for each set of a type of GSE (30) to be generated and a type of an aircraft (10), based on the type of the GSE (30) to be generated for which the traveling route for automatic traveling in an airport is generated, the type of the aircraft (10), coordinates of a departure point and a destination point of the GSE (30) to be generated, and a standard traveling route indicating the traveling route preset for each set of the type of the GSE (30) and the type of the aircraft (10).

15. An information processing device (40) comprising:
a control unit (45) configured to:
generate a traveling route for each set of a type of GSE (30) to be generated and a type of an aircraft (10), based on the type of the GSE (30) to be generated for which the traveling route for automatic traveling in an airport is generated, the type of the aircraft (10), coordinates of a departure point and a destination point of the GSE (30) to be generated, and a standard traveling route indicating the traveling route preset for each set of the type of the GSE (30) and the type of the aircraft (10); and
output the standard traveling route in which the generated traveling route is set.
